# EUROPEAN PATENT APPLICATION

(11) **EP 4 318 671 A1**
(43) Date of publication of application: **07.02.2024**
(21) Application number: 22936066.4
(22) Date of filing: 17.06.2022
(51) Int. Cl.: H01M 4/58, H01M 4/505, H01M 4/36, H01M 4/62, H01M 10/0525, H01M 10/058

(54) **POSITIVE ELECTRODE ACTIVE MATERIAL AND PREPARATION METHOD THEREFOR, POSITIVE ELECTRODE PLATE, SECONDARY BATTERY, BATTERY MODULE, BATTERY PACK, AND ELECTRIC DEVICE**

(71) Applicant: Contemporary Amperex Technology Co., Limited, Ningde City, Fujian Province 352100 (CN)
(72) Inventor: JIANG, Yao, Ningde, Fujian 352100 (CN); ZHANG, Xinxin, Ningde, Fujian 352100 (CN); OUYANG, Chuying, Ningde, Fujian 352100 (CN); DENG, Bin, Ningde, Fujian 352100 (CN); YUAN, Tianci, Ningde, Fujian 352100 (CN); WANG, Zhiqiang, Ningde, Fujian 352100 (CN); XU, Bo, Ningde, Fujian 352100 (CN); CHEN, Shangdong, Ningde, Fujian 352100 (CN)
(74) Representative: Kraus & Lederer Patentanwälte PartGmbB
(86) International application number: PCT/CN2022/099484
(87) International publication number: WO 2023/240603

(57) **Abstract**

This application provides a positive electrode active material and a preparation method thereof, a positive electrode plate, a secondary battery, a battery module, a battery pack, and an electric apparatus. The positive electrode active material includes a core containing Li₁₊ₓMn_{1y}A_{y}P_{1-z}R_{z}O₄, a first coating layer covering the core and containing a crystalline pyrophosphate MaP₂O₇ and a crystalline oxide M'_{b}O_{c}, and a second coating layer covering the first coating layer. The positive electrode active material in this application can reduce the generation of Li/Mn antisite defects, reduce the dissolution of manganese, and decrease the lattice change rate, increasing the capacity of the secondary battery and improving the cycling performance, high-temperature storage performance, and safety performance of the secondary battery.

## Description

### TECHNICAL FIELD

This application relates to the field of secondary battery technologies, and in particular, to a positive electrode active material, a preparation method of positive electrode active material, a positive electrode plate, a secondary battery, a battery module, a battery pack, and an electric apparatus.

### BACKGROUND

In recent years, with increasingly wide use of secondary batteries, secondary batteries have been widely used in energy storage power supply systems such as hydroelectric, thermal, wind, and solar power plants, and many other fields including electric tools, electric bicycles, electric motorcycles, electric vehicles, military equipment, and aerospace. Due to great development of secondary batteries, higher requirements are imposed on energy density, cycling performance, safety performance, and the like of secondary batteries. As an existing positive electrode active material for secondary batteries, lithium manganese phosphate is prone to Li/Mn antisite defects and severe dissolution of manganese during charge and discharge, which affects the gram capacity of secondary batteries and leads to poor safety performance and cycling performance of secondary batteries.

### SUMMARY

This application has been made in view of the foregoing issues. An objective of this application is to provide a positive electrode active material, a preparation method of positive electrode active material, a positive electrode plate, a secondary battery, a battery module, a battery pack, and an electric apparatus so as to solve problems that the existing lithium manganese phosphate positive electrode active material is prone to Li/Mn antisite defects and severe dissolution of manganese during charge and discharge, thereby solving problems of low capacity, poor safety performance, and cycling performance of secondary batteries.

To achieve the foregoing purpose, a first aspect of this application provides a positive electrode active material with a core-shell structure, including a core and a shell covering the core, where
the core includes Li₁₊ₓMn_{1-y}A_{y}P_{1-z}R_{z}O₄, where x is any value in the range from -0.100 to 0.100; y is any value in the range from 0.001 to 0.500; z is any value in the range from 0.001 to 0.100; A is one or more elements selected from Zn, Al, Na, K, Mg, Mo, W, Ti, V, Zr, Fe, Ni, Co, Ga, Sn, Sb, Nb, and Ge, optionally one or more elements selected from Zn, Fe, Ti, V, Ni, Co, and Mg; and R is one or more elements selected from B, Si, N, and S; and
the shell includes a first coating layer covering the core and a second coating layer covering the first coating layer;
where the first coating layer includes a crystalline pyrophosphate MₐP₂O₇ and a crystalline oxide M'_{b}O_{c}, where a is greater than 0 and less than or equal to 4; b is greater than 0 and less than or equal to 2; c is greater than 0 and less than or equal to 5; M is one or more elements selected from Li, Fe, Ni, Mg, Co, Cu, Zn, Ti, Ag, Zr, Nb, and Al, optionally one or more elements selected from Li, Fe, and Zr; and M' is one or more elements selected from alkali metals, alkaline earth metals, transition metals, group IIIA elements, group IVA elements, lanthanides, and Sb, optionally one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, and more optionally one or more elements selected from Mg, Al, Si, Zn, Zr, and Sn; and
the second coating layer includes carbon.

The inventors of this application have found in actual operation that: the lithium manganese phosphate positive electrode active material is prone to Li/Mn antisite defects and severe dissolution of manganese during deep charge and discharge. The manganese dissolved is reduced to metal manganese after migrating to a negative electrode. The metal manganese produced is equivalent to a "catalyst" and can catalyze decomposition of SEI film (solid electrolyte interphase, solid electrolyte interphase film) on surface of the negative electrode. A part of the by-products produced is gases that can easily cause battery swelling, affecting the safety performance of the secondary battery, and another part of the by-products is deposited on surface of the negative electrode, hindering the passage of lithium ions in and out of the negative electrode, causing an increase in the impedance of the secondary battery and affecting the kinetic performance and cycling performance of the battery. In addition, to supplement the lost SEI film, active lithium inside the electrolyte and the battery is continuously consumed, which has irreversible effects on the capacity retention rate of the secondary battery.

Thus, the applicant has surprisingly found that: with a positive electrode active material obtained by doping a specific amount of a specific element at both Mn and P sites of the compound LiMnP04, coating surface of the compound with a first coating layer containing the pyrophosphate and the oxide, and coating surface of the first coating layer with a second coating layer containing carbon, the generation of Li/Mn antisite defects can be significantly reduced, the dissolution of manganese is reduced, and the lattice change rate is decreased, thereby increasing the capacity of the secondary battery and improving the cycling performance, high-temperature storage performance, and safety performance of the secondary battery.

Unless otherwise specified, in the chemical formula Li₁₊ₓMn_{1-y}A_{y}P_{1-z}R_{z}O₄, when A is two or more elements, the foregoing limitation on the value range of y is not only a limitation on the stoichiometric number of each element as Abut also a limitation on the sum of the stoichiometric numbers of all elements as A. For example, when A is two or more elements Al, A2, ..., An, the stoichiometric numbers yl, y2, ..., yn of all of Al, A2, ..., An must fall within the value range defined by this application for y, and the sum of yl, y2, ..., yn must also fall within the value range. Similarly, under the condition that R is two or more elements, the limitation on the value range of the stoichiometric number of R in this application also has the foregoing meaning.

Unless otherwise specified, in the chemical formula MₐP₂O₇, when M is two or more elements, the foregoing limitation on the value range of a is not only a limitation on the stoichiometric number of each element as M but also a limitation on the sum of the stoichiometric numbers of all elements as M. For example, when M is two or more elements: Ml, M2, ..., Mn, the stoichiometric numbers al, a2, ..., an of all of M1, M2, ..., Mn must fall within the value range defined by this application for a, and the sum of a1, a2, ..., an must also fall within the value range. Similarly, under the condition that M' is two or more elements in the chemical formula M'_{b}O_{c}, the limitation on the value range of the stoichiometric number b of M' in this application also has the foregoing meaning.

In any embodiment of the first aspect, the pyrophosphate in the first coating layer has an interplanar spacing of 0.293-0.326 nm and an included angle of 26.41°-32.57° for a (111) crystal orientation;
optionally, the interplanar spacing of the pyrophosphate in the first coating layer is 0.300-0.310 nm; and/or
optionally, the included angle of the (111) crystal orientation of the pyrophosphate in the first coating layer is 29.00°-30.00°.

With the interplanar spacing and the included angle of the (111) crystal orientation of the pyrophosphate in the first coating layer within the foregoing ranges, the impurity phase in the coating layer can be effectively avoided, thereby increasing the gram capacity of the material and improving the cycling performance and rate performance of the secondary battery.

In any embodiment of the first aspect, a ratio of y to 1-y in the core is 1:10 to 10:1, optionally 1:4 to 1:1. Herein, y represents the sum of the stoichiometric numbers of doping elements at the Mn site. The energy density and cycling performance of the secondary battery prepared by using the positive electrode active material can be further improved when the foregoing conditions are satisfied.

In any embodiment of the first aspect, a ratio of z to 1-z in the core is 1:9 to 1:999, optionally 1:499 to 1:249. Herein, z represents the sum of the stoichiometric numbers of doping elements at the P site. The energy density and cycling performance of the secondary battery prepared by using the positive electrode active material can be further improved when the foregoing conditions are satisfied.

In any embodiment of the first aspect, a coating amount of the first coating layer is greater than 0% by weight and less than or equal to 7% by weight, optionally 4-5.6% by weight based on a weight of the core.

With the coating amount of the first coating layer within the foregoing ranges, the dissolution of manganese can be further inhibited and lithium ion transport can be further promoted, thereby maintaining low impedance in the secondary battery and improving the kinetic performance of the secondary battery.

In any embodiment of the first aspect, a weight ratio of the pyrophosphate to the oxide in the first coating layer is 1:3 to 3:1, optionally 1:3 to 1:1.

An appropriate ratio of the pyrophosphate to the oxide is conducive to fully utilizing the synergistic effect of the two, which can further inhibit the dissolution of manganese while maintaining low impedance in the secondary battery.

In any embodiment of the first aspect, a crystallinity of the pyrophosphate in the first coating layer is 10% to 100%, optionally 50% to 100%.

In the first coating layer of the lithium manganese phosphate positive electrode active material in this application, the pyrophosphate having a specific crystallinity is conducive to maintaining the structural stability of the first coating layer and reducing lattice defects. This is conducive to fully utilizing the effect of the pyrophosphate on hindering the dissolution of manganese and also conducive to reducing the amount of lithium impurities contained on the surface and decreasing the valence state of surface oxygen, thereby reducing interface side reactions between the positive electrode material and the electrolyte, reducing the consumption of electrolyte, and improving the cycling performance and safety performance of the secondary battery.

In any embodiment of the first aspect, a coating amount of the second coating layer is greater than 0% by weight and less than or equal to 6% by weight, optionally 3-5% by weight based on the weight of the core.

The carbon-containing layer as the second coating layer can play a "barrier" function to avoid direct contact between the positive electrode active material and the electrolyte, thereby reducing the corrosion of the active material by the electrolyte and improving the safety performance of the battery at high temperatures. In addition, the carbon-containing layer has high electrical conductivity, which can reduce the internal resistance of the battery, thereby improving the kinetic performance of the secondary battery. With the coating amount of the second coating layer within the foregoing ranges, the kinetic performance and safety performance of the secondary battery can be further improved while a high gram capacity of the positive electrode active material is maintained.

In any embodiment of the first aspect, in the positive electrode active material, A is at least two elements selected from Fe, Ti, V, Ni, Co, and Mg. Selection of the doping elements from the foregoing range is conducive to enhancing the doping effect to further reduce the lattice change rate, thereby inhibiting the dissolution of manganese and reducing the consumption of the electrolyte and active lithium, and is also conducive to further reducing the surface oxygen activity and reducing interface side reactions between the positive electrode active material and the electrolyte, thereby improving the cycling performance and high-temperature storage performance of the battery.

In any embodiment of the first aspect, the positive electrode active material has a Li/Mn antisite defect concentration of 5.1% or less, optionally 4% or less, and more optionally 2% or less. In the positive electrode active material in this application, the Li/Mn antisite defect refers to site exchange of Li⁺ and Mn²⁺ in LiMnP04 lattice. Because the Li⁺ transport channel is a one-dimensional channel and Mn²⁺ has difficulty in migrating in the Li⁺ transport channel, Mn²⁺ of the antisite defect hinders the Li⁺ transport. With the Li/Mn antisite defect concentration controlled at a low level, the gram capacity and rate performance of LiMnP04 can be improved.

In any embodiment of the first aspect, the lattice change rate of the positive electrode active material before and after complete lithium deintercalation and intercalation is 7.5% or less, optionally 6% or less, and more optionally 4% or less. The processes of lithium deintercalation and intercalation of LiMnP04 are two-phase reactions. The interface stress between two phases is determined by the magnitude of the lattice change rate, and a smaller lattice change rate indicates a lower interface stress, making Li⁺ transport easier. Therefore, a decrease in the lattice change rate of the core will be conducive to enhancing Li⁺ transport capacity, thereby improving the rate performance of the secondary battery.

In any embodiment of the first aspect, a valence state of surface oxygen of the positive electrode active material is -1.83 or less, optionally -1.88 or less, and more optionally -1.98 to -1.88. This is due to the fact that a higher valence state of oxygen in the compound indicates a higher electron gaining capability, that is, stronger oxidation. In the positive electrode active material in this application, with the surface valence state of oxygen controlled at a lower level, the reactivity of the surface of the positive electrode material can be reduced and the interface side reactions between the positive electrode material and the electrolyte can be reduced, thereby improving the cycling performance and high-temperature storage performance of the secondary battery.

In any embodiment of the first aspect, a compacted density of the positive electrode active material under 3 tons (T) is 2.0 g/cm³ or more, optionally 2.2 g/cm³ or more. A higher compacted density of the positive electrode active material, that is, a higher weight per unit volume of the active substance, will be more conducive to improving the volumetric energy density of the secondary battery.

A second aspect of this application provides a preparation method of positive electrode active material, which includes the following steps:
a step of providing a core material: the core material including Li₁₊ₓMn_{1- y}A_{y}P_{1-z}R_{z}O₄, where x is any value in the range from -0.100 to 0.100; y is any value in the range from 0.001 to 0.500; z is any value in the range from 0.001 to 0.100; A is one or more elements selected from Zn, Al, Na, K, Mg, Mo, W, Ti, V, Zr, Fe, Ni, Co, Ga, Sn, Sb, Nb, and Ge, optionally one or more elements selected from Zn, Fe, Ti, V, Ni, Co, and Mg; and R is one or more elements selected from B, Si, N, and S; and
a coating step: providing a powder including pyrophosphate MₐP₂O₇ and a suspension including a carbon source and oxide M'_{b}O_{c}, and mixing the core material, the powder including pyrophosphate MₐP₂O₇, and the suspension including a carbon source and oxide M'_{b}O_{c} for sintering, to obtain a positive electrode active material, where a is greater than 0 and less than or equal to 4; b is greater than 0 and less than or equal to 2; c is greater than 0 and less than or equal to 5; M is one or more elements selected from Li, Fe, Ni, Mg, Co, Cu, Zn, Ti, Ag, Zr, Nb, and Al, optionally one or more elements selected from Li, Fe, and Zr; and M' is one or more elements selected from alkali metals, alkaline earth metals, transition metals, group IIIA elements, group IVA elements, lanthanides, and Sb, optionally one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, and more optionally one or more elements selected from Mg, Al, Si, Zn, Zr, and Sn;
where the positive electrode active material has a core-shell structure, including a core and a shell covering the core, the core including Li₁₊ₓMn_{1-y}A_{y}P_{1-z}R_{z}O₄ and the shell including a first coating layer covering the core and a second coating layer covering the first coating layer; where the first coating layer includes a crystalline pyrophosphate MₐP₂O₇ and a crystalline oxide M'_{b}O_{c}, and the second coating layer includes carbon; where A, R, M, M', x, y, z, a, b, and c are defined as previously described.

Thus, the applicant has surprisingly found that: with a positive electrode active material obtained by doping a specific amount of a specific element at both Mn and P sites of the compound LiMnP04, coating surface of the compound with a first coating layer containing the pyrophosphate and the oxide, and coating surface of the first coating layer with a second coating layer containing carbon, the generation of Li/Mn antisite defects can be significantly reduced, the dissolution of manganese is reduced, and the lattice change rate is decreased, thereby increasing the capacity of the secondary battery and improving the cycling performance, high-temperature storage performance, and safety performance of the secondary battery.

In any embodiment of the second aspect of this application, the step of providing a core material includes the following steps:
step (1): mixing a manganese source, a source of element A, and an acid to obtain a mixture; and
step (2): mixing the mixture with a lithium source, a phosphorus source, a source of element R, and an optional solvent for sintering under protection of an inert gas to obtain the core material including Li₁₊ₓMn_{1-y}A_{y}P_{1-z}R_{z}O₄.

In any embodiment of the second aspect of this application, the step (1) is performed at 20°C-120°C, optionally 25°C-80°C; and/or in the step (1), the mixing is carried out by stirring at 500-700 rpm for 60-420 minutes.

In any embodiment of the second aspect of this application, the source of element A is one or more selected from elementary substance, sulfates, halides, nitrates, organic acid salts, oxides, and hydroxides of element A; and/or the source of element R is one or more selected from elementary substance, sulfates, halides, nitrates, organic acid salts, oxides, hydroxides, and inorganic acids of element R.

In any embodiment of the second aspect of this application, the powder including pyrophosphate MₐP₂O₇ is prepared by the following steps:
mixing a source of element M, a phosphorus source, and an optional solvent to obtain a mixture, adjusting the pH of the mixture to 4-6, continuing the mixing, and then carrying out drying and sintering.

In any embodiment of the second aspect of this application, in the steps of preparing the powder including the pyrophosphate MₐP₂O₇, the drying is carried out at 100°C-300°C for 4-8 h, optionally at 150°C-200°C; and/or the sintering is carried out at 500°C-800°C under protection of an inert gas for 4-10 h, optionally at 650°C-800°C.

In any embodiment of the second aspect of this application, in the coating step, the sintering temperature is 500-800°C and the sintering time is 4-10 h.

A third aspect of this application provides a positive electrode plate including a positive electrode current collector and a positive electrode film layer disposed on at least one surface of the positive electrode current collector, where the positive electrode film layer includes the positive electrode active material according to the first aspect of this application or a positive electrode active material prepared by the preparation method according to the second aspect of this application; and optionally, a percentage of the positive electrode active material in the positive electrode film layer is 10% or more by weight based on a total weight of the positive electrode film layer.

In any embodiment of the third aspect of this application, the percentage of the positive electrode active material in the positive electrode film layer is 90-99.5% by weight based on the total weight of the positive electrode film layer. This ensures that the secondary battery has a high capacity and good cycling performance, high-temperature storage performance, and safety performance.

A fourth aspect of this application provides a secondary battery including the positive electrode active material according to the first aspect of this application or a positive electrode active material prepared by the preparation method according to the second aspect of this application or the positive electrode plate according to the third aspect of this application.

A fifth aspect of this application provides a battery module including the secondary battery according to the fourth aspect of this application.

A sixth aspect of this application provides a battery pack including the battery module according to the fifth aspect of this application.

A seventh aspect of this application provides an electric apparatus including at least one selected from the secondary battery according to the fourth aspect of this application, the battery module according to the fifth aspect of this application, and the battery pack according to the sixth aspect of this application.

### BRIEF DESCRIPTION OF DRAWINGS

FIG. 1 is a schematic diagram of a positive electrode active material having a core-shell structure according to an embodiment of this application.
FIG. 2 is a schematic diagram of a secondary battery according to an embodiment of this application.
FIG. 3 is an exploded view of the secondary battery according to the embodiment of this application in FIG. 2.
FIG. 4 is a schematic diagram of a battery module according to an embodiment of this application.
FIG. 5 is a schematic diagram of a battery pack according to an embodiment of this application.
FIG. 6 is an exploded view of the battery pack according to the embodiment of this application in FIG. 5.
FIG. 7 is a schematic diagram of an electric apparatus using a secondary battery as a power source according to an embodiment of this application.

Reference signs in the accompanying drawings are described as follows:
1. battery pack; 2. upper box body; 3. lower box body; 4. battery module; 5. secondary battery; 51. housing; 52. electrode assembly; 53. top cover assembly; 11. core; 12. first coating layer; and 13. second coating layer.

### DESCRIPTION OF EMBODIMENTS

The following specifically discloses embodiments of a positive electrode active material, and a preparation method of positive electrode active material, a positive electrode plate, a secondary battery, a battery module, a battery pack, and an electric apparatus in this application with appropriate reference to detailed descriptions of accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

A range "less/lower than a value" or "greater/higher than a value" in this application indicate a range limited by the value as an upper or lower limit.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the method may further include step (c), indicating that step (c) may be added to the method in any order. For example, the method may include steps (a), (b), and (c), or steps (a), (c), and (b), or steps (c), (a), and (b), or the like.

Unless otherwise specified, "include" and "contain" mentioned in this application are inclusive or may be exclusive. For example, terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Unless otherwise specified, in this application, the median particle size Dᵥ50 refers to a particle size at which the cumulative volume distribution percentage of the positive electrode active material reaches 50%. In this application, the median particle size Dᵥ50 of the positive electrode active material may be determined in a laser diffraction particle size analyzing method. For example, according to the standard GB/T 19077-2016, a laser particle size analyzer (for example, Malvern Master Size 3000) is used.

Unless otherwise specified, in this application, the term "coating layer" refers to a substance layer covering on the core. The core may be completely or partially coated with the substance layer, and use of the "coating layer" is merely for ease of description and is not intended to limit the present invention. Similarly, the term "thickness of the coating layer" refers to a thickness of the substance layer covering on the core in a radial direction of the core.

Unless otherwise specified, in this application, the term "source" refers to a compound that is a source of an element. For example, types of "source" include but are not limited to carbonates, sulfates, nitrates, elementary substances, halides, oxides, and hydroxides.

### [Secondary battery]

Secondary batteries, also referred to as rechargeable batteries or storage batteries, are batteries whose active material can be activated for continuous use through charging after the batteries are discharged.

Generally, a secondary battery pack includes a positive electrode plate, a negative electrode plate, a separator, and an electrolyte. During charging and discharging of the battery, active ions (for example, lithium ions) are intercalated and deintercalated back and forth between the positive electrode plate and the negative electrode plate. The separator is sandwiched between the positive electrode plate and the negative electrode plate to mainly prevent short circuit between the positive and negative electrodes and allow active ions to pass through. The electrolyte is between the positive electrode plate and the negative electrode plate to mainly conduct active ions.

### [Positive electrode active material]

This application provides a positive electrode active material with a core-shell structure, including a core and a shell covering the core, where
the core includes Li₁₊ₓMn_{1-y}A_{y}P_{1-z}R_{z}O₄, where x is any value in the range from -0.100 to 0.100; y is any value in the range from 0.001 to 0.500; z is any value in the range from 0.001 to 0.100; A is one or more elements selected from Zn, Al, Na, K, Mg, Mo, W, Ti, V, Zr, Fe, Ni, Co, Ga, Sn, Sb, Nb, and Ge, optionally one or more elements selected from Zn, Fe, Ti, V, Ni, Co, and Mg; and R is one or more elements selected from B, Si, N, and S; and
the shell includes a first coating layer covering the core and a second coating layer covering the first coating layer;
where the first coating layer includes a crystalline pyrophosphate MₐP₂O₇ and a crystalline oxide M'_{b}O_{c}, where a is greater than 0 and less than or equal to 4; b is greater than 0 and less than or equal to 2; c is greater than 0 and less than or equal to 5; M is one or more elements selected from Li, Fe, Ni, Mg, Co, Cu, Zn, Ti, Ag, Zr, Nb, and Al, optionally one or more elements selected from Li, Fe, and Zr; and M' is one or more elements selected from alkali metals, alkaline earth metals, transition metals, group IIIA elements, group IVA elements, lanthanides, and Sb, optionally one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, and more optionally one or more elements selected from Mg, Al, Si, Zn, Zr, and Sn; and
the second coating layer includes carbon.

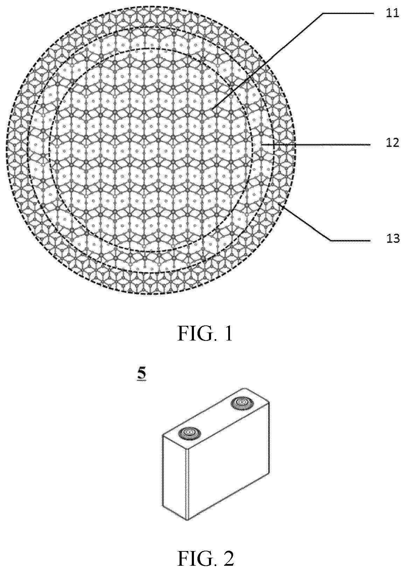

As shown in FIG. 1, the positive electrode active material having a core-shell structure in this application includes a core 11, a first coating layer 12 covering the core 11, and a second coating layer 13 covering the first coating layer 12. The core 11 includes Li₁₊ₓMn_{1-y}A_{y}P_{1-z}R_{z}O₄. An element A doped at the manganese site of the lithium manganese phosphate in the core 11 helps to decrease the lattice change rate of the lithium manganese phosphate during lithium deintercalation and intercalation, improve the structural stability of lithium manganese phosphate positive electrode material, greatly reduce the dissolution of manganese, and reduce the oxygen activity on surface of particles. An element R doped at the phosphorus site helps to change the difficulty of change of Mn-0 bond length, thereby reducing the migration barrier of lithium ions, promoting the migration of lithium ions, and improving the rate performance of the secondary battery. The first coating layer 12 includes a crystalline pyrophosphate and a crystalline oxide. The high migration barrier (> 1 eV) of transition metals in the pyrophosphate can effectively inhibit the dissolution of transition metals. Because the crystalline oxide has high structural stability and low surface activity, the coating with the crystalline oxide can effectively mitigate the interface side reactions, thereby improving the high-temperature cycling and high-temperature storage performance, and the like, of the battery. In addition, as a carbon-containing layer, the second coating layer 13 can effectively improve the electrical conductivity and desolvation ability of LiMnPCh. In addition, the "barrier" function of the second coating layer 13 can further hinder the migration of manganese ions into the electrolyte and reduce the corrosion of the active material by the electrolyte. Therefore, with specific element doping and surface coating on lithium manganese phosphate by using the positive electrode active material in this application, it is possible to reduce the generation of Li/Mn antisite defects, effectively inhibit the dissolution of Mn during lithium deintercalation and intercalation, and promote the migration of lithium ions, thereby improving the rate performance of the cell and improving the cycling performance, high-temperature performance, and safety performance of the secondary battery. It should be noted that positions of main characteristic peaks of the positive electrode active material in this application are basically consistent with those of LiMnP04 without doping, indicating that the doped lithium manganese phosphate positive electrode active material has no impurity phase, and that the improvement of the secondary battery performance is mainly attributed to the element doping rather than impurity phases.

In some embodiments, the entire Li₁₊ₓMn_{1-y}A_{y}P_{1-z}R_{z}O₄ remains electrically neutral.

Unless otherwise specified, in the chemical formula Li₁₊ₓMn_{1+y}A_{y}P_{1-z}R_{z}O₄, when A is two or more elements, the foregoing limitation on the value range of y is not only a limitation on the stoichiometric number of each element as Abut also a limitation on the sum of the stoichiometric numbers of all elements as A. For example, when A is two or more elements Al, A2, ..., An, the stoichiometric numbers yl, y2, ..., yn of all of Al, A2, ..., An must fall within the value range defined by this application for y, and the sum of yl, y2, ..., yn must also fall within the value range. Similarly, under the condition that R is two or more elements, the limitation on the value range of the stoichiometric number of R in this application also has the foregoing meaning.

Unless otherwise specified, in the chemical formula MₐP₂O₇, when M is two or more elements, the foregoing limitation on the value range of a is not only a limitation on the stoichiometric number of each element as M but also a limitation on the sum of the stoichiometric numbers of all elements as M. For example, when M is two or more elements: M1, M2, ..., Mn, the stoichiometric numbers a1, a2, ..., an of all of M1, M2, ..., Mn must fall within the value range defined by this application for a, and the sum of a1, a2, ..., an must also fall within the value range. Similarly, under the condition that M' is two or more elements in the chemical formula M'_{b}O_{c}, the limitation on the value range of the stoichiometric number b of M' in this application also has the foregoing meaning.

In some embodiments, when A is one, two, three, or four elements selected from Zn, Al, Na, K, Mg, Mo, W, Ti, V, Zr, Fe, Ni, Co, Ga, Sn, Sb, Nb, and Ge, A_{y} is Qₙ₁Dₙ₂Eₙ₃Kₙ₄, where nl+n2+n3+n4=y, n1, n2, n3, and n4 are all positive numbers but are not all zero, Q, D, E, and K are each independently one selected from Zn, Al, Na, K, Mg, Mo, W, Ti, V, Zr, Fe, Ni, Co, Ga, Sn, Sb, Nb, and Ge, and optionally, at least one of Q, D, E, and K is Fe. Optionally, one of n1, n2, n3, and n4 is zero and the rest is non-zero; more optionally, two of n1, n2, n3, and n4 are zero and the rest is non-zero; and further optionally, three of n1, n2, n3, and n4 are zero and the rest is non-zero. In the core Li₁₊ₓMn_{1-y}A_{y}P_{1-z}R_{z}O₄, it is advantageous to dope one, two, three, or four of the foregoing element A at the manganese site, optionally, dope one, two, or three of the foregoing element A. Furthermore, it is advantageous to dope one or two of the element R at the phosphorus site, which facilitates a uniform distribution of the doping elements.

In some embodiments, values of x, y, and z satisfy the following condition: making the entire core electrically neutral.

In the core Li₁₊ₓMn_{1-y}A_{y}P_{1-z}R_{z}O₄, the magnitude of x is affected by the magnitudes of valence states of A and R as well as the magnitudes of y and z to ensure that the entire system exhibits electrical neutrality. A too-small x value leads to a reduced amount of lithium contained in the entire core system and affect the extractable gram capacity of the material. The y value limits the total amount of all doping elements. A too-small y value, that is, an excessively low doping amount, makes the doping elements useless, and y being more than 0.5 leads to less Mn content in the system and affects the voltage plateau of the material. Element R doping occurs at P site. Because the P-0 tetrahedron is relatively stable and a too-large z value affects the stability of the material, the z value is defined to 0.001-0.100.

In addition, the entire core system is kept electrically neutral, which can ensure that there are as few defects and impurity phases as possible in the positive electrode active material. If excess transition metal (for example, manganese) is present in the positive electrode active material, the excess transition metal is likely to precipitate in the form of an elementary substance or form impurity phases inside the lattice because the material system itself has a relatively stable structure, so maintaining electrical neutrality helps minimize the presence of such impurity phases. In addition, ensuring the electrical neutrality of the system can also lead to lithium vacancies in the material in some cases, resulting in better kinetic performance of the material.

Process control (for example, thoroughly mixing and grinding of the materials of various sources) can ensure that the elements are uniformly distributed in the lattice without aggregation. The positions of the main characteristic peaks in an XRD pattern of lithium manganese phosphate doped with element A and element R are the same as those of LiMnP04 without doping, indicating that the doping process do not introduce impurity phases. Therefore, the improvement on the performance of the core is mainly attributed to elemental doping rather than impurity phases. After the positive electrode active material is prepared, the inventors of this application cut the middle region of the prepared positive electrode active material particles by focused ion beam (FIB for short). Tests conducted through transmission electron microscope (TEM for short) and X-ray energy spectrum analysis (EDS for short) show that the elements are uniformly distributed without aggregation.

In some embodiments, values of a, b and c satisfy the following condition: making MₐP₂O₇ and M'_{b}O_{c} electrically neutral.

In some embodiments, the pyrophosphate in the first coating layer has an interplanar spacing of 0.293-0.326 nm and an included angle of 26.41°-32.57° for the (111) crystal orientation;
optionally, the interplanar spacing of the pyrophosphate in the first coating layer is 0.300-0.310 nm (for example, 0.303 nm); and/or
optionally, the included angle of the (111) crystal orientation of the pyrophosphate in the first coating layer is 29.00°-30.00° (for example, 29.496°).

With the interplanar spacing and the included angle of the (111) crystal orientation of the pyrophosphate in the first coating layer within the foregoing ranges, the impurity phase in the coating layer can be effectively avoided, thereby increasing the gram capacity of the material and improving the cycling performance and rate performance of the secondary battery.

In some embodiments, a ratio of y to 1-y in the core is 1:10 to 10:1, optionally 1:4 to 1:1. Herein, y represents the sum of the stoichiometric numbers of doping elements at the Mn site. The energy density and cycling performance of the secondary battery prepared by using the positive electrode active material can be further improved when the foregoing conditions are satisfied.

In some embodiments, a ratio of z to 1-z in the core is 1:9 to 1:999, optionally 1:499 to 1:249. Herein, z represents the sum of the stoichiometric numbers of doping elements at the P site. The energy density and cycling performance of the secondary battery prepared by using the positive electrode active material can be further improved when the foregoing conditions are satisfied.

In some embodiments, a coating amount of the first coating layer is greater than 0% by weight and less than or equal to 7% by weight, optionally 4-5.6% by weight based on the weight of the core.

With the coating amount of the first coating layer within the foregoing ranges, the dissolution of manganese can be further inhibited and lithium ion transport can be further promoted, thereby maintaining low impedance in the secondary battery and improving the kinetic performance of the secondary battery.

In some embodiments, a weight ratio of the pyrophosphate to the oxide in the first coating layer is 1:3 to 3:1, optionally 1:3 to 1:1.

An appropriate ratio of the pyrophosphate to the oxide is conducive to fully utilizing the synergistic effect of the two, which can further inhibit the dissolution of manganese while maintaining low impedance in the secondary battery.

In some embodiments, the thickness of the first coating layer is 1-100 nm. As a result, the migration barrier of the transition metal in the first coating layer is high, which can effectively reduce the dissolution of the transition metal. The oxide therein has high stability, which can effectively mitigate the interface side reactions and thus enhance the high-temperature stability of the material.

In some embodiments, the thickness of the second coating layer is 1-100 nm.

In some embodiments, a crystallinity of the pyrophosphate in the first coating layer is 10% to 100%, optionally 50% to 100%.

In the first coating layer of the lithium manganese phosphate positive electrode active material in this application, the pyrophosphate having a specific crystallinity is conducive to maintaining the structural stability of the first coating layer and reducing lattice defects. This is conducive to fully utilizing the effect of the pyrophosphate on hindering the dissolution of manganese and also conducive to reducing the amount of lithium impurities contained on the surface and decreasing the valence state of surface oxygen, thereby reducing interface side reactions between the positive electrode material and the electrolyte, reducing the consumption of electrolyte, and improving the cycling performance and safety performance of the secondary battery.

In some embodiments, the crystallinity of the first coating layer of pyrophosphate of the positive electrode active material can be tested by conventional technical means in the art, for example, a density, infrared spectroscopy, differential scanning calorimetry, and nuclear magnetic resonance absorption method, or for example, an X-ray diffraction method.

The specific X-ray diffraction method for testing the crystallinity of the first coating layer of pyrophosphate of the positive electrode active material may include the following steps:
taking a specific amount of the positive electrode active material powder, and measuring a total scattering intensity by X-ray, where the total scattering intensity is a sum of scattering intensities of substances in the entire space and is only related to the intensity of the primary rays, the chemical structure of the positive electrode active material powder, a total number of electrons participating in the diffraction, that is, the mass, and not to the order state of the sample; then separating crystalline scattering from non-crystalline scattering in a diffraction pattern, where the crystallinity is a ratio of a scattering intensity of the crystalline part to the total scattering intensity.

It should be noted that in some embodiments, the crystallinity of the pyrophosphate in the coating layer can be adjusted, for example, by adjusting the process conditions of the sintering process, for example sintering temperature and sintering time.

In some embodiments, a coating amount of the second coating layer is greater than 0% by weight and less than or equal to 6% by weight, optionally 3-5% by weight based on the weight of the core.

The carbon-containing layer as the second coating layer can play a "barrier" function to avoid direct contact between the positive electrode active material and the electrolyte, thereby reducing the corrosion of the active material by the electrolyte and improving the safety performance of the battery at high temperatures. In addition, the carbon-containing layer has high electrical conductivity, which can reduce the internal resistance of the battery, thereby improving the kinetic performance of the secondary battery. With the coating amount of the second coating layer within the foregoing ranges, the kinetic performance and safety performance of the secondary battery can be further improved while a high gram capacity of the positive electrode active material is maintained.

In some embodiments, in the positive electrode active material, A is at least one element selected from Zn, Fe, Ti, V, Ni, Co, and Mg, and optionally, A is at least two elements selected from Fe, Ti, V, Ni, Co, and Mg. Selection of the doping elements from the foregoing range is conducive to enhancing the doping effect to further reduce the lattice change rate, thereby inhibiting the dissolution of manganese and reducing the consumption of the electrolyte and active lithium, and is also conducive to further reducing the surface oxygen activity and reducing interface side reactions between the positive electrode active material and the electrolyte, thereby improving the cycling performance and high-temperature storage performance of the battery.

In some embodiments, the positive electrode active material has a Li/Mn antisite defect concentration of 5.1% or less, optionally 4% or less, and more optionally 2% or less. In the positive electrode active material in this application, the Li/Mn antisite defect refers to site exchange of Li⁺ and Mn²⁺ in LiMnP04 lattice. Because the Li⁺ transport channel is a one-dimensional channel and Mn²⁺ has difficulty in migrating in the Li⁺ transport channel, Mn²⁺ of the antisite defect hinders the Li⁺ transport. With the Li/Mn antisite defect concentration controlled at a low level, the gram capacity and rate performance of LiMnP04 can be improved. In this application, the antisite defect concentration can be determined, for example, according to JIS K 0131-1996.

In some embodiments, the lattice change rate of the positive electrode active material before and after complete lithium deintercalation and intercalation is 7.5% or less, optionally 6% or less, and more optionally 4% or less. The processes of lithium deintercalation and intercalation of LiMnP04 are two-phase reactions. The interface stress between two phases is determined by the magnitude of the lattice change rate, and a smaller lattice change rate indicates a lower interface stress, making Li⁺ transport easier. Therefore, a decrease in the lattice change rate of the core will be conducive to enhancing Li⁺ transport capacity, thereby improving the rate performance of the secondary battery. The lattice change rate can be measured by a method known in the art, such as X-ray diffraction mapping (XRD).

In some embodiments, the valence state of surface oxygen of the positive electrode active material is -1.83 or less, optionally -1.88 or less, and more optionally -1.98 to 1.88. This is due to the fact that a higher valence state of oxygen in the compound indicates a higher electron gaining capability, that is, stronger oxidation. In the positive electrode active material in this application, with the surface valence state of oxygen controlled at a lower level, the reactivity of the surface of the positive electrode material can be reduced and the interface side reactions between the positive electrode material and the electrolyte can be reduced, thereby improving the cycling performance and high-temperature storage performance of the secondary battery. The valence state of surface oxygen can be measured by a method known in the art, such as electron energy loss spectroscopy (EELS).

In some embodiments, a compacted density of the positive electrode active material under 3 tons (T) is 2.0 g/cm³ or more, optionally 2.2 g/cm³ or more. A higher compacted density of the positive electrode active material, that is, a higher weight per unit volume of the active substance, will be more conducive to improving the volumetric energy density of the secondary battery. In this application, the compacted density can be determined, for example, according to GB/T 24533-2009.

In some embodiments, optionally, a button cell containing the positive electrode active material has an average discharge voltage of 3.5 V or more and a discharge gram capacity of 135 mAh/g or more; optionally, an average discharge voltage of 3.6 V or more and a discharge gram capacity of 145 mAh/g or more.

Despite an average discharge voltage of 4.0 V or more, LiMnP04 without doping has a relatively low discharge gram capacity, generally less than 130 mAh/g, and therefore, has a relatively low energy density. Adjusting the lattice change rate by doping can enable LiMnP04 to have a significant increase in the discharge gram capacity and a significant increase in the overall energy density, with a slight decrease in the average discharge voltage.

In some embodiments, x is any value selected within the range from -0.100 to 0.006, such as -0.01, -0.005, -0.001, 0, 0.001, 0.002, 0.004, and 0.005. With the x value selected within this range, the generation of Li/Mn antisite defects can be further reduced, the dissolution of manganese is reduced, and the lattice change rate is decreased, further increasing the capacity of the secondary battery and improving the cycling performance, high-temperature storage performance, and safety performance of the secondary battery.

In some embodiments, y is any value selected within the range from 0.1 to 0.4, such as 0.2, 0.3, or 0.4. With the y value selected within this range, the generation of Li/Mn antisite defects can be further reduced, the dissolution of manganese is reduced, and the lattice change rate is decreased, further increasing the capacity of the secondary battery and improving the cycling performance, high-temperature storage performance, and safety performance of the secondary battery.

In some embodiments, a is any value in the range from 1 to 4. For example, a is 1, 2, 3, or 4.

In some embodiments, b is any value in the range from 1 to 2. For example, b is 1 or 2.

In some embodiments, c is any value in the range from 1 to 5, optionally any value in the range from 1 to 3. For example, c is 1, 2, 3, 4, or 5.

### [Preparation method of positive electrode active material]

This application provides a preparation method of positive electrode active material, which includes the following steps:
a step of providing a core material: the core material including Li₁₊ₓMn_{1-y}A_{y}P_{1-z}R_{z}O₄, where x is any value in the range from -0.100 to 0.100; y is any value in the range from 0.001 to 0.500; z is any value in the range from 0.001 to 0.100; A is one or more elements selected from Zn, Al, Na, K, Mg, Mo, W, Ti, V, Zr, Fe, Ni, Co, Ga, Sn, Sb, Nb, and Ge, optionally one or more elements selected from Zn, Fe, Ti, V, Ni, Co, and Mg; and R is one or more elements selected from B, Si, N, and S; and
a coating step: providing a powder including pyrophosphate MₐP₂O₇ and a suspension including a carbon source and oxide M'_{b}O_{c}, and mixing the core material, the powder including pyrophosphate MₐP₂O₇, and the suspension including a carbon source and oxide M'_{b}O_{c} for sintering, to obtain a positive electrode active material, where a is greater than 0 and less than or equal to 4; b is greater than 0 and less than or equal to 2; c is greater than 0 and less than or equal to 5; M is one or more elements selected from Li, Fe, Ni, Mg, Co, Cu, Zn, Ti, Ag, Zr, Nb, and Al, optionally one or more elements selected from Li, Fe, and Zr; and M' is one or more elements selected from alkali metals, alkaline earth metals, transition metals, group IIIA elements, group IVA elements, lanthanides, and Sb, optionally one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, and more optionally one or more elements selected from Mg, Al, Si, Zn, Zr, and Sn;
where the positive electrode active material has a core-shell structure, including a core and a shell covering the core, the core including Li₁₊ₓMn_{1-y}A_{y}P_{1-z}R_{z}O₄ and the shell including a first coating layer covering the core and a second coating layer covering the first coating layer; where the first coating layer includes a crystalline pyrophosphate MₐP₂O₇ and a crystalline oxide M'_{b}O_{c}, and the second coating layer includes carbon; where A, R, M, M', x, y, z, a, b, and c are defined as previously described.

Thus, the applicant has surprisingly found that: with a positive electrode active material obtained by doping a specific amount of a specific element at both Mn and P sites of the compound LiMnP04, coating surface of the compound with a first coating layer containing the pyrophosphate and the oxide, and coating surface of the first coating layer with a second coating layer containing carbon, the generation of Li/Mn antisite defects can be significantly reduced, the dissolution of manganese is reduced, and the lattice change rate is decreased, thereby increasing the capacity of the secondary battery and improving the cycling performance, high-temperature storage performance, and safety performance of the secondary battery.

In some embodiments, the step of providing a core material includes the following steps:
step (1): mixing a manganese source, a source of element A, and an acid to obtain a mixture; and
step (2): mixing the mixture with a lithium source, a phosphorus source, a source of element R, and an optional solvent for sintering under protection of an inert gas to obtain the core material including Li₁₊ₓMn_{1-y}A_{y}P_{1-z}R_{z}O₄. Definitions of A and R are described as above.

In some embodiments, the step (1) is performed at 20°C-120°C, optionally 40°C-120°C (for example, about 25°C, about 30°C, about 50°C, about 60°C, about 70°C, about 80°C, about 90°C, about 100°C, about 110°C, or about 120°C); and/or in the step (1), the mixing is carried out by stirring at 500-700 rpm for 60-420 minutes (more optionally 120-360 minutes, for example, about 1 hour, about 2 hours, about 3 hours, about 4 hours, about 5 hours, about 6 hours, or about 7 hours).

In some embodiments, in the step (2), the mixing is carried out at a temperature of 20-120°C, optionally 40-120°C (for example, about 30°C, about 50°C, about 60°C, about 70°C, about 80°C, about 90°C, about 100°C, about 110°C, or about 120°C) for 1-10 h (for example, about 2 hours, about 3 hours, about 4 hours, about 5 hours, about 6 hours, about 7 hours, about 8 hours, about 9 hours, about 10 hours, about 11 hours, or about 12 hours).

When the temperature and time during the preparation of core particles are within the foregoing ranges, the cores obtained from the preparation and the positive electrode active material made therefrom have fewer lattice defects, which is conducive to inhibiting the dissolution of manganese and reducing the interface side reactions between the positive electrode active material and the electrolyte, thereby improving the cycling performance and safety performance of the secondary battery.

In some embodiments, in the step (2), the mixing is carried out at a pH of 3.5-6, optionally a pH of 4-6, and more optionally a pH of 4-5. It should be noted that the pH may be adjusted in this application by a method commonly used in the art, for example, the addition of an acid or alkali.

In some optional embodiments, the mixture obtained in the step (1) is filtered, dried, and ground to obtain element A-doped manganese salt particles with a particle size Dᵥ50 of 50-200 nm, and the element A-doped manganese salt particles are used in the step (2) to mix with the lithium source, the phosphorus source, the source of element R, and an optional solvent.

In some embodiments, in the step (2), a molar ratio of the mixture or element A-doped manganese salt particles, the lithium source and the phosphorus source is 1:0.5-2.1:0.5-2.1, optionally about 1:1:1.

In some embodiments, in the step (2), the sintering is carried out in an atmosphere of inert gas or mixture of inert gas and hydrogen at 600-950°C for 4-10 hours. Optionally, the protective atmosphere is a gas mixture of 70-90% nitrogen and 10-30% hydrogen by volume. Optionally, the sintering may be carried out at about 650°C, about 700°C, about 750°C, about 800°C, about 850°C, or about 900°C for about 2 hours, about 3 hours, about 4 hours, about 5 hours, about 6 hours, about 7 hours, about 8 hours, about 9 hours, or about 10 hours. Optionally, the sintering temperature and sintering time may be within any range defined by any of the foregoing values, which can improve the crystallinity of the core and reduce the generation of impurity phases so that the core maintains a specific granularity, thereby improving the gram capacity and compacted density of the positive electrode active material and improving the overall performance of the secondary battery, including the rate performance.

In some optional embodiments, the material mixed in the step (2) is dried to obtain a powder, and then the powder is sintered to obtain the core material containing Li₁₊ₓMn_{1-y}A_{y}P_{1-z}R_{z}O₄.

In some embodiments, the powder including pyrophosphate MₐP₂O₇ is prepared by the following steps:
mixing a source of element M, a phosphorus source, and an optional solvent to obtain a mixture, adjusting the pH of the mixture to 4-6, continuing the mixing, and then carrying out drying and sintering.

In some embodiments, in the steps of preparing the powder including the pyrophosphate MₐP₂O₇, the drying is carried out at 100°C-300°C for 4-8 h, optionally at 150°C-200°C; and/or the sintering is carried out at 500°C-800°C under protection of an inert gas for 4-10 h, optionally at 650°C-800°C.

In some embodiments, in the coating step, the sintering temperature is 500-800°C and the sintering time is 4-10 h.

The source of the material is not particularly limited in the preparation method in this application, and the source of an element may include one or more of elementary substance, sulfates, halides, nitrates, organic acid salts, oxides, and hydroxides of the element, provided that the source can achieve the objectives of the preparation method in this application.

In some embodiments, the source of element A is one or more selected from elementary substance, sulfates, halides, nitrates, organic acid salts, oxides, and hydroxides of element A; and/or the source of element R is one or more selected from elementary substance, sulfates, halides, nitrates, organic acid salts, oxides, hydroxides, and inorganic acids of element R.

In some embodiments, the source of element M is one or more selected from elementary substance, carbonates, sulfates, halides, nitrates, organic acid salts, oxides, and hydroxides of element M.

In some embodiments, the source of element M' is one or more selected from elementary substance, carbonates, sulfates, halides, nitrates, organic acid salts, oxides, and hydroxides of element M'.

The amount of elements A, R, M, and M' added from the respective sources depends on a target doping amount, and the ratio of amounts of the lithium, manganese, and phosphorus sources conforms to the stoichiometric ratio.

In this application, the manganese source may be a manganese-containing substance known in the art that can be used for preparing lithium manganese phosphate. For example, the manganese source may be one or more selected from elemental manganese, manganese dioxide, manganese phosphate, manganese oxalate, and manganese carbonate.

In this application, the acid may be one or more selected from organic acids such as hydrochloric acid, sulfuric acid, nitric acid, phosphoric acid, silicic acid, metasilicic acid, and organic acids such as oxalic acid. In some embodiments, the acid is a dilute organic acid with a concentration of 60% or less by weight.

In this application, the lithium source may be a lithium-containing substance known in the art that can be used for preparing lithium manganese phosphate. For example, the lithium source is one or more selected from lithium carbonate, lithium hydroxide, lithium phosphate, and lithium dihydrogen phosphate.

In this application, the phosphorus source may be a phosphorus-containing substance known in the art that can be used for preparing lithium manganese phosphate. For example, the phosphorus source is one or more selected from diammonium hydrogen phosphate, diammonium dihydrogen phosphate, ammonium phosphate, and phosphoric acid.

In this application, as an example, the carbon source is one or more selected from starch, sucrose, glucose, polyvinyl alcohol, polyethylene glycol, and citric acid.

### [Positive electrode plate]

This application provides a positive electrode plate including a positive electrode current collector and a positive electrode film layer disposed on at least one surface of the positive electrode current collector, where the positive electrode film layer includes the foregoing positive electrode active material or a positive electrode active material prepared by the foregoing preparation method; and a percentage of the positive electrode active material in the positive electrode film layer is 10% or more by weight based on a total weight of the positive electrode film layer.

In some embodiments, the percentage of the positive electrode active material in the positive electrode film layer is 90-99.5% by weight based on the total weight of the positive electrode film layer. This ensures that the secondary battery has a high capacity and good cycling performance, high-temperature storage performance, and safety performance.

In some embodiments, the positive electrode current collector may be a metal foil or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene (PP), polyethylene terephthalate (PET), polybutylene terephthalate (PBT), polystyrene (PS), or polyethylene (PE)).

In some embodiments, the positive electrode film layer may further include other positive electrode active materials well known in the art and used for batteries. For example, the positive electrode active material may include at least one of the following materials: olivine-structured lithium-containing phosphate and modified compounds thereof. However, this application is not limited to such materials, and may alternatively use other conventional materials that can be used as positive electrode active materials for batteries. One of these positive electrode active materials may be used alone, or two or more of them may be used in combination. An example of the olivine-structured lithium-containing phosphate may include but is not limited to at least one of lithium iron phosphate (for example, LiFePO₄ (or LFP for short)), composite materials of lithium iron phosphate and carbon, lithium manganese phosphate (for example, LiMnP04), composite materials of lithium manganese phosphate and carbon, lithium manganese iron phosphate, and composite materials of lithium manganese iron phosphate and carbon.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofibers.

### [Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, a matrix of polypropylene (PP), polyethylene terephthalate (PET), polybutylene terephthalate (PBT), polystyrene (PS), or polyethylene (PE)).

In some embodiments, the negative electrode active material may be a well-known negative electrode active material used for a battery in the art. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compounds, silicon-carbon composites, silicon-nitrogen composites, and silicon alloys. The tin-based material may be selected from at least one of elemental tin, tin-oxygen compound, or tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer further optionally includes a binder. In an example, the binder may be selected from at least one of styrene butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. For example, the conductive agent may be selected from at least one of superconducting carbon, acetylene black, carbon black, Ketjen black, carbon dots, carbon nanotubes, graphene, and carbon nanofibers.

In some embodiments, the negative electrode film layer further optionally includes other adjuvants such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### [Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is liquid and includes an electrolyte salt and a solvent.

In some embodiments, the electrolytic salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the electrolyte further optionally includes an additive. For example, the additive may include a negative electrode film-forming additive and a positive electrode film-forming additive, or may include an additive that can improve some performance of the battery, for example, an additive for improving over-charge performance of the battery and an additive for improving high-temperature performance or low-temperature performance of the battery.

### [Separator]

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic, which, for example, may be polypropylene, polybutylene terephthalate, and polybutylene succinate.

This application does not impose any special limitations on a shape of the secondary battery, and the secondary battery may be cylindrical, rectangular, or of any other shapes. For example, FIG. 2 shows a secondary battery 5 of a rectangular structure as an example.

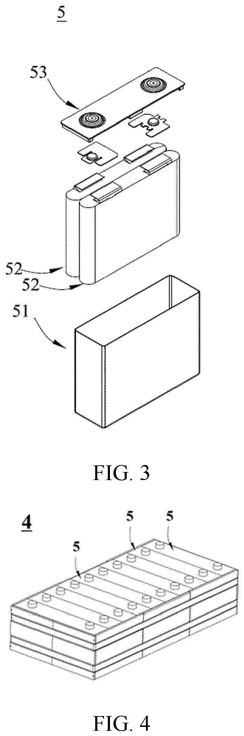

In some embodiments, referring to FIG. 3, the outer package may include a housing 51 and a cover plate 53. The housing 51 may include a base plate and side plates connected onto the base plate, and the base plate and the side plates enclose an accommodating cavity. The housing 51 has an opening communicating with the accommodating cavity, and the cover plate 53 can cover the opening to seal the accommodating cavity. The positive electrode plate, the negative electrode plate, and the separator may be made into an electrode assembly 52 through winding or lamination. The electrode assembly 52 is enclosed in the accommodating cavity. The electrolyte infiltrates into the electrode assembly 52. The secondary battery 5 may include one or more electrode assemblies 52, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

FIG. 4 shows a battery module 4 as an example. Referring to FIG. 4, in the battery module 4, a plurality of secondary batteries 5 may be sequentially arranged in a length direction of the battery module 4. Certainly, the batteries may alternatively be arranged in any other manners. Further, the plurality of secondary batteries 5 may be fastened by using fasteners.

Optionally, the battery module 4 may further include a housing with accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

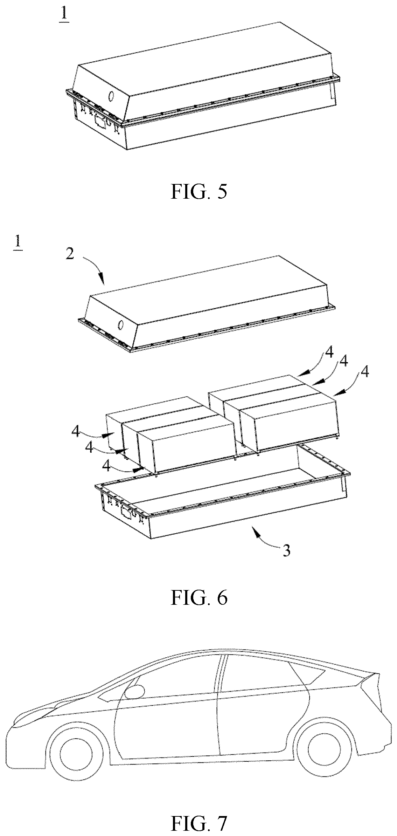

FIG. 5 and FIG. 6 show a battery pack 1 as an example. Referring to FIG. 5 and FIG. 6, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 7 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

### [Examples]

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated. The amounts of components in the examples of the present invention are all measured by mass without water of crystallization, unless otherwise specified.

The sources of raw materials used in the preparation examples and examples of this application are as follows:

| Name | Chemical formula | Manufacturer | Specification |
|---|---|---|---|
| Manganese carbonate | MnCO₃ | Shandong Xiya Chemical Industry Co., Ltd. | 1 Kg |
| Lithium carbonate | Li₂CO₃ | Shandong Xiya Chemical Industry Co., Ltd. | 1 Kg |
| Magnesium carbonate | MgCO₃ | Shandong Xiya Chemical Industry Co., Ltd. | 1 Kg |
| Zinc carbonate | ZnCO₃ | Wuhan Xinru Chemical Industry Co., Ltd. | 25 Kg |
| Ferrous carbonate | FeCO₃s | Xi'an Lanzhiguang Fine Material Co., Ltd. | 1 Kg |
| Nickel sulfate | NiCO₃ | Shandong Xiya Chemical Industry Co., Ltd. | 1 Kg |
| Titanium sulfate | Ti(SO₄)₂ | Shandong Xiya Chemical Industry Co., Ltd. | 1 Kg |
| Cobalt sulfate | CoSO₄ | Xiamen Simagchem Co., Ltd. | 500 g |
| Vanadium dichloride | VCl₂ | Shanghai Jinjinle Industry Co., Ltd. | 1 Kg |
| Oxalic acid dihydrate | C₂H₂O₄^{•}2H₂O | Shanghai Jinjinle Industry Co., Ltd. | 1 Kg |
| Ammonium dihydrogen phosphate | NH₄H₂PO₄ | Shanghai Chengshao Biotechnology Co., Ltd. | 500 g |
| Sucrose | C₁₂H₂₂O₁₁ | Shanghai Yuanye Biotechnology Co., Ltd. | 100 g |
| Sulfuric acid | H₂SO₄ | Shenzhen Haishi'an Biotechnology Co., Ltd. | Mass fraction of 60% |
| Nitric acid | HNO₃ | Anhui Lingtian Fine Chemical Co., Ltd. | Mass fraction of 60% |
| Nitric acid | HNO₃ | Anhui Lingtian Fine Chemical Co., Ltd. | Mass fraction of 85% |
| Metasilicic acid | H₂SiO₃ | Shanghai Yuanye Biotechnology Co., Ltd. | 100 g |
| Boric acid | H₃BO₃ | Changzhou Qidi Chemical Co., Ltd. | 1 Kg |
| Aluminum trioxide | AL2O3 | Hebei Guanlang Biotechnology Co., Ltd. | 25 Kg |
| Magnesium oxide | MgO | Hebei Guanlang Biotechnology Co., Ltd. | 25 Kg |
| Zirconium dioxide | ZrO2 | Qingxuan Shengyi Biotechnology Co., Ltd. | 1 Kg |
| Copper oxide | CuO | Hebei Guanlang Biotechnology Co., Ltd. | 25 Kg |
| Silicon dioxide | SiO2 | Hebei Guanlang Biotechnology Co., Ltd. | 25 Kg |
| Tungsten trioxide | WO3 | Hebei Guanlang Biotechnology Co., Ltd. | 25 Kg |
| Titanium dioxide | TiO2 | Shanghai Yuanye Biotechnology Co., Ltd. | 500 g |
| Vanadium pentoxide | V2O5 | Shanghai Jinjinle Industry Co., Ltd. | 1 Kg |
| Nickel oxide | NiO | Hubei Wande Chemical Co., Ltd. | 25 Kg |

### Example 1-1

### (1) Preparation of co-doped lithium manganese phosphate core

**Preparation of Fe, Co, and V co-doped manganese oxalate:** 689.5 g manganese carbonate (denoted as MnCO₃, the same applies hereinafter), 455.2 g of ferrous carbonate (denoted as FeCO₃, the same applies hereinafter), 4.6 g of cobalt sulfate (denoted as CoSO₄, the same applies hereinafter), and 4.9 g of vanadium dichloride (denoted as VCl₂, the same applies hereinafter) were thoroughly mixed in a mixer for 6 hours; a resulting mixture was transferred to a reactor, with addition of 5 liters of deionized water and 1260.6 g of oxalic acid dihydrate (denoted as C₂H₂O₄.2H₂O, the same applies hereinafter); the reactor was heated to 80°C, and the stirring was carried out at 600 rpm for 6 hours until the reaction was terminated (no bubbles were generated), and a Fe, Co, and V co-doped manganese oxalate suspension was obtained; and the suspension was then filtered and a resulting filter cake was dried at 120°C and then ground to obtain Fe, Co, and V co-doped manganese oxalate dihydrate particles with a median particle size Dᵥ50 of 100 nm.

**Preparation of Fe, Co, V, and S co-doped lithium manganese phosphate:** The manganese oxalate dihydrate particles (1793.4 g) obtained in the previous step, 369.0 g of lithium carbonate (denoted as Li₂CO₃, the same applies hereinafter), 1.6 g of dilute sulfuric acid with a concentration of 60% (denoted as 60% H₂SO₄, the same applies hereinafter), and 1148.9 g of ammonium dihydrogen phosphate (denoted as NH₄H₂PO₄, the same applies hereinafter) were added to 20 liters of deionized water, and a resulting mixture was stirred for 10 hours and mixed to uniformity to obtain a slurry; the slurry was transferred to a spray drying apparatus for spray drying and granulation, with the drying temperature set to 250°C and the drying time to 4 hours, and a powder was obtained; and the powder was sintered at 700°C for 4 hours in a protective atmosphere of nitrogen (90% by volume) and hydrogen (10% by volume) to obtain 1572.1 g **of Fe,** Co, V, and S co-doped lithium manganese phosphate.

### (2) Preparation of lithium iron pyrophosphate and suspension containing aluminum trioxide and sucrose

Preparation of lithium iron pyrophosphate powder: 4.77 g of lithium carbonate, 7.47 g of ferrous carbonate, 14.84 g of ammonium dihydrogen phosphate, and 1.3 g of oxalic acid dihydrate were dissolved in 50 ml of deionized water; a resulting mixture had a pH of 5 and was stirred for 2 hours for the reaction mixture to fully react; then the solution after reaction was warmed up to 80°C and maintained at that temperature for 4 hours to obtain a suspension containing Li₂FeP₂O₇; the suspension was filtered, washed with deionized water, and dried at 120°C for 4 h to obtain a powder; and the powder was sintered at 650°C in a nitrogen atmosphere for 8 hours, naturally cooled to room temperature, and then ground to obtain Li₂FeP₂O₇ powder.

**Preparation of suspension containing aluminum trioxide and sucrose:** 47.1 g of nano-A1203 (with a particle size of about 20 nm) and 74.6 g of sucrose (denoted as C₁₂H₂₂O₁₁, the same applies hereinafter) were dissolved in 1500 ml of deionized water, followed by stirring for 6 hours to ensure thorough mixing of the mixture; and then the obtained solution was warmed up to 120°C and maintained at that temperature for 6 hours to obtain a suspension containing aluminum trioxide and sucrose.

### (3) Coating

1572.1 g of the Fe, Co, V, and S co-doped lithium manganese phosphate and 15.72 g of the lithium iron pyrophosphate (Li₂FeP₂O₇) powder were added to the suspension containing aluminum trioxide and sucrose prepared in the previous step; the foregoing substances were stirred and mixed to uniformity, and then transferred to a vacuum oven to dry at 150°C for 6 hours; a resulting product was then dispersed by sand milling; and after dispersion, a product resulted therefrom was sintered in a nitrogen atmosphere at 700°C for 6 hours to obtain a target product: lithium manganese phosphate coated with two layers.

### Examples 1-2 to 1-6

The preparation conditions for lithium manganese phosphate cores in Examples 1-2 to 1-6 were the same as those in Example 1-1, except that neither vanadium dichloride nor cobalt sulfate was used and that 463.4 g of ferrous carbonate, 1.6 g of dilute sulfuric acid with a concentration of 60%, 1148.9 g of ammonium dihydrogen phosphate, and 369.0 g of lithium carbonate were used during the preparation of the co-doped lithium manganese phosphate core.

In addition, conditions were the same as those in Example 1-1, except that during the preparation of lithium iron pyrophosphate and suspension containing aluminum trioxide and sucrose and during the application of the first coating layer and the second coating layer, the raw materials used were adjusted accordingly in accordance with ratios of the coating amounts shown in Table 1 to the corresponding coating amount in Example 1-1 so that the amounts of Li₂FeP₂O₇/Al₂O₃ in Examples 1-2 to 1-6 were respectively 12.6 g/37.68 g, 15.7 g/47.1 g, 18.8 g/56.52 g, 22.0/65.94 g, and 25.1 g/75.36 g, and that the amount of sucrose in Examples 1-2 to 1-6 was 37.3 g.

### Examples 1-7 to 1-10

The conditions in Examples 1-7 to 1-10 were the same as those in Example 1-3 except that the amounts of sucrose were 74.6 g, 149.1 g, 186.4 g, and 223.7 g, respectively so that the corresponding coating amounts of the carbon layer as the second coating layer were 31.4 g, 62.9 g, 78.6 g, and 94.3 g, respectively.

### Examples 1-11 to 1-14

The conditions in Examples 1-11 to 1-14 were the same as those in Example 1-7, except that the amounts of various raw materials were adjusted accordingly in accordance with the coating amounts shown in Table 1 so that the amounts of Li₂FeP₂O₇/ Al₂O₃ were respectively 23.6 g/39.25 g, 31.4 g/31.4 g, 39.3 g/23.55 g, and 47.2 g/15.7 g during the preparation of lithium iron pyrophosphate and suspension containing aluminum trioxide and sucrose.

### Example 1-15

The conditions in Example 1-15 were the same as those in Example 1-14, except that 492.80 g of ZnC03 was used in place of ferrous carbonate during the preparation of the co-doped lithium manganese phosphate core.

### Examples 1-16 to 1-18

The conditions in Examples 1-16 to 1-18 were the same as those in Example 1-7, except that 466.4 g of NiCOs, 5.0 g of zinc carbonate, and 7.2 g of titanium sulfate in place of ferrous carbonate were used during the preparation of the co-doped lithium manganese phosphate core in Example 1-16, that 455.2 g of ferrous carbonate and 8.5 g of vanadium dichloride were used during the preparation of the co-doped lithium manganese phosphate core in Example 1-17, and that 455.2 g of ferrous carbonate, 4.9 g of vanadium dichloride, and 2.5 g of magnesium carbonate were used during the preparation of the co-doped lithium manganese phosphate core in Example 1-18.

### Examples 1-19 and 1-20

The conditions in Examples 1-19 and 1-20 were the same as those in Example 1-18, except that 369.4 g of lithium carbonate and 1.05 g of dilute nitric acid with a concentration of 60% in place of dilute sulfuric acid were used during the preparation of the co-doped lithium manganese phosphate core in Example 1-19, and that 369.7 g of lithium carbonate and 0.78 g of metasilicic acid in place of dilute sulfuric acid were used during the preparation of the co-doped lithium manganese phosphate core in Example 1-20.

### Examples 1-21 and 1-22

The conditions in Examples 1-21 and 1-22 were the same as those in Example 1-20, except that 632.0 g of manganese carbonate, 463.30 g of ferrous carbonate, 30.5 g of vanadium dichloride, 21.0 g of magnesium carbonate, and 0.78 g of metasilicic acid were used during the preparation of the co-doped lithium manganese phosphate core in Example 1-21; and that 746.9 g of manganese carbonate, 289.6 g of ferrous carbonate, 60.9 g of vanadium dichloride, 42.1 g of magnesium carbonate, and 0.78 g of metasilicic acid were used during the preparation of the co-doped lithium manganese phosphate core in Example 1-22.

### Examples 1-23 and 1-24

The conditions in Examples 1-23 to 1-24 were the same as those in Example 1-22, except that 804.6 g of manganese carbonate, 231.7 g of ferrous carbonate, 1156.2 g of ammonium dihydrogen phosphate, 1.2 g of boric acid (mass fraction of 99.5%), and 370.8 g of lithium carbonate were used during the preparation of the co-doped lithium manganese phosphate core in Example 1-23; and that 862.1 g of manganese carbonate, 173.8 g of ferrous carbonate, 1155.1 g of ammonium dihydrogen phosphate, 1.86 g of boric acid (mass fraction of 99.5%), and 371.6 g of lithium carbonate were used during the preparation of the co-doped lithium manganese phosphate core in Example 1-24.

### Example 1-25

The conditions in Example 1-25 were the same as those in Example 1-20, except that 370.1 g of lithium carbonate, 1.56 g of metasilicic acid, and 1147.7 g of ammonium dihydrogen phosphate were used during the preparation of the co-doped lithium manganese phosphate core in Example 1-25.

### Example 1-26

The conditions in Example 1-26 were the same as those in Example 1-20, except that 368.3 g of lithium carbonate, 4.9 g of dilute sulfuric acid with a mass fraction of 60%, 919.6 g of manganese carbonate, 224.8 g of ferrous carbonate, 3.7 g of vanadium dichloride, 2.5 g of magnesium carbonate, and 1146.8 g of ammonium dihydrogen phosphate were used during the preparation of the co-doped lithium manganese phosphate core in Example 1-26.

### Example 1-27

The conditions in Example 1-27 were the same as those in Examples 1-20 except that 367.9 g of lithium carbonate, 6.5 g of dilute sulfuric acid with a concentration of 60%, and 1145.4 g of ammonium dihydrogen phosphate were used during the preparation of the co-doped lithium manganese phosphate core in Example 1-27.

### Examples 1-28 to 1-33

The conditions in Examples 1-28 to 1-33 were the same as those in Example 1-20, except that 1034.5 g of manganese carbonate, 108.9 g of ferrous carbonate, 3.7 g of vanadium dichloride, 2.5 g of magnesium carbonate, the respective amounts of lithium carbonate of 367.6 g, 367.2 g, 366.8 g, 366.4 g, 366.0 g, and 332.4 g, the respective amounts of ammonium dihydrogen phosphate of 1144.5 g, 1143.4 g, 1142.2 g, 1141.1 g, 1139.9 g, and 1138.8 g, and the respective amounts of dilute sulfuric acid with a concentration of 60% of 8.2 g, 9.8 g, 11.4 g, 13.1 g, 14.7 g, and 16.3 g were used during the preparation of the co-doped lithium manganese phosphate core in Examples 1-28 to 1-33.

### Examples 1-34 to 1-38 and Example 1-43

Conditions were the same as those in Example 1-1, except that during the preparation of lithium iron pyrophosphate and suspension containing oxide and sucrose and during the application of the first coating layer and the second coating layer, the raw materials used were adjusted accordingly in accordance with ratios of the coating amounts shown in Table 1 to the corresponding coating amount in Example 1-1 so that the amounts of Li₂FeP₂O₇/MgO in Example 1-34 were respectively 15.72 g/47.1 g, the amounts of Li₂FeP₂O₇/ZrO₂ in Example 1-35 were respectively 15.72 g/ 47.1 g, the amounts of Li₂FeP₂O₇/ZnO in Example 1-36 were respectively 15.72 g/47.1 g, the amounts of Li₂FeP₂O₇/SnO₂ in Example 1-37 were respectively 15.72 g/47.1 g, the amounts of Li₂FeP₂O₇/SiO₂ in Examples 1-38 were respectively 15.72 g/47.1 g, and the amounts of Li₂FeP₂O₇/V₂O₅ in Example 1-43 were respectively 15.72 g/47.1 g.

### Examples 1-39 to 1-41

### (1) Preparation of core Li₁.₁Mn_{0.6}Fe_{0.393}Mgo_{0.007}P_{0.9}Si_{0.1}O₄ in Example 1-39.

**Preparation of Fe and Mg co-doped manganese oxalate:** 689.5 g of manganese carbonate (denoted as MnCO₃, the same applies hereinafter), 455.2 g of ferrous carbonate (denoted as FeCO₃, the same applies hereinafter), and 5.90 g of magnesium carbonate (denoted as MgCO₃, the same applies hereinafter) were thoroughly mixed in a mixer for 6 hours; a resulting mixture was transferred to a reactor, with addition of 5 liters of deionized water and 1260.6 g of oxalic acid dihydrate (denoted as C₂H₂O₄.2H₂O, the same applies hereinafter); the reactor was heated to 80°C, and the stirring was carried out at 600 rpm for 6 hours until the reaction was terminated (no bubbles were generated), and a Fe and Mg co-doped manganese oxalate suspension was obtained; and the suspension was then filtered and a resulting filter cake was dried at 120°C and then ground to obtain Fe and Mg co-doped manganese oxalate dihydrate particles with a median particle size Dᵥ50 of 100 nm.

**Preparation of Fe, Mg, and Si co-doped lithium manganese phosphate:** The manganese oxalate dihydrate particles (1791.3 g) obtained in the previous step, 406.3 g of lithium carbonate (denoted as Li₂CO₃, the same applies hereinafter), 7.8 g of metasilicic acid (denoted as H2Si03, the same applies hereinafter), and 1035.0 g of ammonium dihydrogen phosphate (denoted as NH₄H₂PO₄, the same applies hereinafter) were added to 20 liters of deionized water, and a resulting mixture was stirred for 10 hours and mixed to uniformity to obtain a slurry; the slurry was transferred to a spray drying apparatus for spray drying and granulation, with the drying temperature set to 250°C and the drying time to 4 hours, and a powder was obtained; and the foregoing powder was sintered at 700°C for 4 hours in a protective atmosphere of nitrogen (90% by volume) and hydrogen (10% by volume) to obtain 1574.0 g of Fe, Mg, and Si co-doped lithium manganese phosphate.

### (2) Preparation of core LiMn_{0.999}Fe_{0.001}P_{0.995}N_{0.005}O₄ in Example 1-40.

**Preparation of Fe doped manganese oxalate:** 1148.0 g of manganese carbonate (denoted as MnC03, the same applies hereinafter) and 11.58 g of ferrous carbonate (denoted as FeCOs, the same applies hereinafter) were thoroughly mixed in a mixer for 6 hours; a resulting mixture was transferred to a reactor, with addition of 5 liters of deionized water and 1260.6 g of oxalic acid dihydrate (denoted as C₂H₂O₄.2H₂O, the same applies hereinafter); the reactor was heated to 80°C, and the stirring was carried out at 600 rpm for 6 hours until the reaction was terminated (no bubbles were generated), and a Fe doped manganese oxalate suspension was obtained; and the suspension was then filtered and a resulting filter cake was dried at 120°C and then ground to obtain Fe doped manganese oxalate dihydrate particles with a median particle size Dᵥ50 of 100 nm.

**Preparation of Fe and N co-doped lithium manganese phosphate:** The manganese oxalate dihydrate particles (1789.9 g) obtained in the previous step, 369.4 g of lithium carbonate (denoted as Li₂CO₃, the same applies hereinafter), 5.25 g of dilute nitric acid (denoted as HNO₃ 60%, the same applies hereinafter), and 1144.3 g of ammonium dihydrogen phosphate (denoted as NH₄H₂PO₄, the same applies hereinafter) were added to 20 liters of deionized water, and a resulting mixture was stirred for 10 hours and mixed to uniformity to obtain a slurry; the slurry was transferred to a spray drying apparatus for spray drying and granulation, with the drying temperature set to 250°C and the drying time to 4 hours, and a powder was obtained; and the powder was sintered at 700°C for 4 hours in a protective atmosphere of nitrogen (90% by volume) and hydrogen (10% by volume) to obtain 1567.7 g of Fe and N co-doped lithium manganese phosphate.

### (3) Preparation of core LiMn_{0.50}Fe_{0.50}P_{0.995}N_{0.005}O₄ in Example 1-41.

**Preparation of Fe doped manganese oxalate:** 574.7 g of manganese carbonate (denoted as MnC03, the same applies hereinafter) and 579.27 g of ferrous carbonate (denoted as FeCOs, the same applies hereinafter) were thoroughly mixed in a mixer for 6 hours; a resulting mixture was transferred to a reactor, with addition of 5 liters of deionized water and 1260.6 g of oxalic acid dihydrate (denoted as C₂H₂O₄.2H₂O, the same applies hereinafter); the reactor was heated to 80°C, and the stirring was carried out at 600 rpm for 6 hours until the reaction was terminated (no bubbles were generated), and a Fe doped manganese oxalate suspension was obtained; and the suspension was then filtered and a resulting filter cake was dried at 120°C and then ground to obtain Fe doped manganese oxalate dihydrate particles with a median particle size Dᵥ50 of 100 nm.

**Preparation of Fe and N co-doped lithium manganese phosphate:** The manganese oxalate dihydrate particles (1794.4 g) obtained in the previous step, 369.4 g of lithium carbonate (denoted as Li₂CO₃, the same applies hereinafter), 5.25 g of dilute nitric acid (denoted as HNO₃ 60%, the same applies hereinafter), and 1144.3 g of ammonium dihydrogen phosphate (denoted as NH₄H₂PO₄, the same applies hereinafter) were added to 20 liters of deionized water, and a resulting mixture was stirred for 10 hours and mixed to uniformity to obtain a slurry; the slurry was transferred to a spray drying apparatus for spray drying and granulation, with the drying temperature set to 250°C and the drying time to 4 hours, and a powder was obtained; and the powder was sintered at 700°C for 4 hours in a protective atmosphere of nitrogen (90% by volume) and hydrogen (10% by volume) to obtain 1572.2 g of Fe and N co-doped lithium manganese phosphate.

For other conditions in Examples 1-39 to 1-41, refer to Example 1-1.

### Example 1-42

During the preparation of zirconium pyrophosphate, 123.2 g of zirconium dioxide (denoted as Zr02, the same applies hereinafter) and 230.6 g of phosphoric acid (denoted as H₃PO₄ 85%, the same applies hereinafter) were thoroughly mixed; a resulting mixture was heated to 350°C while being continuously stirred for 2 hours for the reaction mixture to fully react;the solution after reaction was maintained at 350°C for 4 hours to obtain a viscous paste containing ZrP₂O₇, which eventually turned into a solid that was washed with deionized water, and a resulting product was ground in a ball mill containing ethanol for 4 h; and a product resulted therefrom was dried under an infrared lamp to obtain ZrP₂O₇ powder.

### Example 1-44

During the preparation of silver pyrophosphate, 463.4 g of silver oxide (denoted as Ag₂O, the same applies hereinafter) and 230.6 g of phosphoric acid (denoted as H₃PO₄ 85%, the same applies hereinafter) were thoroughly mixed; a resulting mixture was heated to 450°C while being continuously stirred for 2 hours for the reaction mixture to fully react;the solution after reaction was maintained at 450°C for 4 hours to obtain a viscous paste containing Ag₄P₂O₇, which eventually turned into a solid that was washed with deionized water, and a resulting product was ground in a ball mill containing ethanol for 4 h; and a product resulted therefrom was dried under an infrared lamp to obtain Ag₄P₂O₇ powder.

### Example 1-45

The example was in fact the same as Example 1-1, except that during the preparation of core, 1044.6 g of manganese carbonate, 1138.5 g of ammonium dihydrogen phosphate and 369.4 g of lithium carbonate were used and that 105.4 g of ferrous carbonate and 10.5 g of dilute nitric acid (denoted as HNO₃ 60%, the same applies hereinafter) were additionally added.

### Example 1-46

Conditions were the same as those in Example 1-1, except that during the preparation of core, 104.5 g of manganese carbonate, 1138.5 g of ammonium dihydrogen phosphate and 371.3 g of lithium carbonate were used and that 1052.8 g of ferrous carbonate and 5.25 g of dilute nitric acid (denoted as HNO₃ 60%, the same applies hereinafter) were additionally added.

### Example 1-47

Conditions in Example 1-47 were the same as those in Example 1-1, except that the amounts of various raw materials were adjusted accordingly in accordance with the coating amounts shown in Table 1 so that the amounts of Li₂FeP₂O₇/Al₂O₃ were respectively 62.9 g/47.1 g during the preparation of lithium iron pyrophosphate and suspension containing aluminum trioxide and sucrose.

### Example 1-48

Operations were the same as those in Example 1-1, except that the amount of sucrose was 111.9 g to make the corresponding coating amount of the carbon layer as the second coating layer 47.1 g.

### Example 1-49

Conditions were the same as those in Example 1-1, except that during the preparation of core, 1034.3 g of manganese carbonate, 1138.5 g of ammonium dihydrogen phosphate and 371.3 g of lithium carbonate were used and that 115.8 g of ferrous carbonate and 5.25 g of dilute nitric acid (denoted as HNO₃ 60%, the same applies hereinafter) were additionally added.

### Example 1-50

Conditions were the same as those in Example 1-1, except that during the preparation of core, 1091.8 g of manganese carbonate, 1138.5 g of ammonium dihydrogen phosphate and 371.3 g of lithium carbonate were used and that 57.9 g of ferrous carbonate and 5.25 g of dilute nitric acid (denoted as HNO₃ 60%, the same applies hereinafter) were additionally added.

### Example 1-51

Conditions were the same as those in Example 1-1, except that during the preparation of core, 804.5 g of manganese carbonate, 1138.5 g of ammonium dihydrogen phosphate, and 371.3 g of lithium carbonate were used, that 347.4 g of ferrous carbonate and 5.25 g of dilute nitric acid (denoted as HNO₃ 60%, the same applies hereinafter) were additionally added, that the amount of sucrose was 111.9 g, and that a corresponding coating amount of carbon was 47.1 g.

### Example 1-52

Conditions were the same as those in Example 1-1, except that 747.0 g of manganese carbonate, 1138.5 g of ammonium dihydrogen phosphate, and 371.3 g of lithium carbonate were used, that 405.3 g of ferrous carbonate and 5.25 g of dilute nitric acid (denoted as HNO₃ 60%, the same applies hereinafter) were additionally added, that the amount of sucrose was 111.9 g, and that a corresponding coating amount of carbon was 47.1 g.

### Example 2-1

Conditions were the same as those in Example 1-1, except that during the preparation of lithium iron pyrophosphate (Li₂FeP₂O₇), the sintering temperature in the powder sintering step was 550°C and the sintering time was 1 h to control the crystallinity of Li₂FeP₂O₇ to be 30%, and that during the preparation of Al₂O₃, the sintering temperature in the coating sintering step was 650°C and the sintering time was 2 h to control the crystallinity of Al₂O₃ to be 100%.

### Example 2-2

Conditions were the same as those in Example 1-1, except that during the preparation of lithium iron pyrophosphate (Li₂FeP₂O₇), the sintering temperature in the powder sintering step was 550°C and the sintering time was 2 h to control the crystallinity of Li₂FeP₂O₇ to be 50%, and that during the preparation of Al₂O₃, the sintering temperature in the coating sintering step was 650°C and the sintering time was 3 h to control the crystallinity of Al₂O₃ to be 100%.

### Example 2-3

Conditions were the same as those in Example 1-1, except that during the preparation of lithium iron pyrophosphate (Li₂FeP₂O₇), the sintering temperature in the powder sintering step was 600°C and the sintering time was 3 h to control the crystallinity of Li₂FeP₂O₇ to be 70%, and that during the preparation of Al₂O₃, the sintering temperature in the coating sintering step was 650°C and the sintering time was 4 h to control the crystallinity of Al₂O₃ to be 100%.

### Example 2-4

Conditions were the same as those in Example 1-1, except that during the preparation of lithium iron pyrophosphate (Li₂FeP₂O₇), the sintering temperature in the powder sintering step was 650°C and the sintering time was 4 h to control the crystallinity of Li₂FeP₂O₇ to be 10%, and that during the preparation of Al₂O₃, the sintering temperature in the coating sintering step was 500°C and the sintering time was 6 h to control the crystallinity of Al₂O₃ to be 100%.

### Examples 3-1 to 3-12

Conditions in Examples 3-1 to 3-12 were the same as those in Example 1-1, except that during the preparation of Fe, Co, and V co-doped manganese oxalate particles, the heating temperature/stirring time in the reactor in Example 3-1 were respectively 60°C/120 minutes; that the heating temperature/stirring time in the reactor in Example 3-2 were respectively 70°C/120 minutes; that the heating temperature/stirring time in the reactor in Example 3-3 were respectively 80°C/120 minutes; that the heating temperature/stirring time in the reactor in Example 3-4 were respectively 90°C/120 minutes; that the heating temperature/stirring time in the reactor in Example 3-5 were respectively 100°C/120 minutes; that the heating temperature/stirring time in the reactor in Example 3-6 were respectively 110°C/120 minutes; that the heating temperature/stirring time in the reactor in Example 3-7 were respectively 120°C/120 minutes; that the heating temperature/stirring time in the reactor in Example 3-8 were respectively 130°C/120 minutes; that the heating temperature/stirring time in the reactor in Example 3-9 were respectively 100°C/60 minutes; that the heating temperature/stirring time in the reactor in Example 3-10 were respectively 100°C/90 minutes; that the heating temperature/stirring time in the reactor in Example 3-11 were respectively 100°C/150 minutes; and that the heating temperature/stirring time in the reactor in Example 3-12 were respectively 100°C/180 minutes.

### Examples 4-1 to 4-4

Conditions were the same as those in Example 1-7, except that during the preparation of lithium iron pyrophosphate (Li₂FeP₂O₇), the drying temperature/drying time in the drying step were respectively 100°C/4 h, 150°C/6 h, 200°C/6 h, and 200°C/6 h; and that during the preparation of lithium iron pyrophosphate (Li₂FeP₂O₇), the sintering temperature and sintering time in the sintering step were respectively 700°C/6 h, 700°C/6 h, 700°C/6 h, and 600°C/6 h.

### Examples 4-5 to 4-7

Conditions were the same as those in Example 1-12, except that during the coating, the drying temperature/drying time in the drying step were respectively 150°C/6 h, 150°C/6 h, and 150°C/4 h; and that during the coating, the sintering temperature and sintering time in the sintering step were respectively 600°C/4 h, 600°C/6 h, and 800°C/8 h.

### Comparative example 1

**Preparation of manganese oxalate:** 1149.3 g of manganese carbonate was added to the reactor, with addition of 5 liters of deionized water and 1260.6 g of oxalic acid dihydrate (denoted as C₂H₂O₄.2H₂O, the same applies hereinafter). The reactor was heated to 80°C, and the stirring was carried out at 600 rpm for 6 hours until the reaction was terminated (no air bubbles were generated), and a manganese oxalate suspension was obtained. The suspension was then filtered and a resulting filter cake was dried at 120°C and then ground to obtain manganese oxalate dihydrate particles with a median particle size Dᵥ50 of 100 nm.

**Preparation of carbon-coated lithium manganese phosphate:** 1789.6 g of manganese oxalate dihydrate particles obtained above, 369.4 g of lithium carbonate (denoted as Li₂CO₃, the same applies hereinafter), 1150.1 g of ammonium dihydrogen phosphate (denoted as NH₄H₂PO₄, the same applies hereinafter), and 31 g sucrose (denoted as C₁₂H₂₂O₁₁, the same applies hereinafter) were added to 20 liters of deionized water, and a resulting mixture was stirred for 10 hours and mixed to uniformity to obtain a slurry; the slurry was transferred to a spray drying apparatus for spray drying and granulation, with the drying temperature set to 250°C and the drying time to 4 hours, and a powder was obtained; and the powder was sintered at 700°C for 4 hours in a protective atmosphere of nitrogen (90% by volume) and hydrogen (10% by volume) to obtain carbon-coated lithium manganese phosphate.

### Comparative example 2

Conditions in Comparative example 2 were the same as those in Comparative example 1, except that 689.5 g of manganese carbonate was used and that 463.3 g of ferrous carbonate was additionally added.

### Comparative example 3

Conditions in Comparative example 3 were the same as those in Comparative example 1, except that 1148.9 g of ammonium dihydrogen phosphate and 369.0 g of lithium carbonate were used and that 1.6 g of dilute sulfuric acid with a concentration of 60% was additionally added.

### Comparative example 4

Conditions in Comparative example 4 were the same as those in Comparative example 1, except that 689.5 g of manganese carbonate, 1148.9 g of ammonium dihydrogen phosphate, and 369.0 g of lithium carbonate were used and that 463.3 g of ferrous carbonate and 1.6 g of dilute sulfuric acid with a concentration of 60% were additionally added.

### Comparative example 5

Conditions in Comparative example 5 were the same as those in Comparative example 4, except that the following steps were additionally added: for preparation of lithium iron pyrophosphate powder, 9.52 g of lithium carbonate, 29.9 g of ferrous carbonate, 29.6 g of ammonium dihydrogen phosphate, and 32.5 g of oxalic acid dihydrate were dissolved in 50 ml of deionized water; a resulting mixture had a pH of 5 and was stirred for 2 hours for the reaction mixture to fully react; then the solution after reaction was warmed up to 80°C and maintained at that temperature for 4 hours to obtain a suspension containing Li₂FeP₂O₇; the suspension was filtered, washed with deionized water, and dried at 120°C for 4 h to obtain a powder; the powder was sintered at 500°C in a nitrogen atmosphere for 4 hours, naturally cooled to room temperature, and then grounded to control the crystallinity of Li₂FeP₂O₇ to be 5%; and 62.8 g of Li₂FeP₂O₇ was used for preparation of the carbon-coated material.

### Comparative example 6

Conditions in Comparative example 6 were the same as those in Comparative example 4, except that the following steps were additionally added: 62.92 g of nano-Al₂O₃ (with a particle size of about 20 nm) and 37.4 g of sucrose (denoted as C₁₂H₂₂O₁₁, the same applies hereinafter) were dissolved in 1500 ml of deionized water, followed by stirring for 6 hours to ensure thorough mixing of the mixture; and then the solution after reaction was warmed up to 120°C and maintained at that temperature for 6 hours to obtain a suspension containing aluminum trioxide and sucrose.

### Comparative example 7

**Preparation of amorphous lithium iron pyrophosphate powder:** 2.38 g of lithium carbonate, 7.5 g of ferrous carbonate, 7.4 g of ammonium dihydrogen phosphate, and 8.1 g of oxalic acid dihydrate were dissolved in 50 ml of deionized water; a resulting mixture had a pH of 5 and was stirred for 2 hours for the reaction mixture to fully react; then the solution after reaction was warmed up to 80°C and maintained at that temperature for 4 hours to obtain a suspension containing Li₂FeP₂O₇; the suspension was filtered, washed with deionized water, and dried at 120°C for 4 h to obtain a powder; and the powder was sintered at 500°C in a nitrogen atmosphere for 4 hours, naturally cooled to room temperature, and then ground to control the crystallinity of Li₂FeP₂O₇ to be 5%.

**Preparation of suspension containing aluminum trioxide and** sucrose: 47.19 g of nano-Al₂O₃ (with a particle size of about 20 nm) and 37.4 g of sucrose (denoted as C₁₂H₂₂O₁₁, the same applies hereinafter) were dissolved in 1500 ml of deionized water, followed by stirring for 6 hours to ensure thorough mixing of the mixture; and then the solution after reaction was warmed up to 120°C and maintained at that temperature for 6 hours to obtain a suspension containing aluminum trioxide and sucrose.

1573.0 g of core, 15.73 g of lithium iron pyrophosphate powder were added to the suspension. Conditions in Comparative example 7 were the same as those in Comparative example 4, except that during the preparation, the sintering temperature in the coating sintering step was 600°C and the sintering time was 4 h to control the crystallinity of LiFePO₄ to be 8%. A carbon-coated positive electrode active material including amorphous lithium iron pyrophosphate and amorphous alumina was obtained.

### Comparative examples 8-11

Conditions were the same as those in Comparative example 7, except that during the preparation of lithium iron pyrophosphate (Li₂FeP₂O₇), the drying temperature/drying time in the drying step in Comparative examples 8-10 were respectively 80°C/3 h, 80°C/3 h, and 80°C/3 h; that the sintering temperature and sintering time in the sintering step during the coating in Comparative examples 8-10 were respectively 400°C/3 h, 400°C/3 h, and 350°C/2 h; that the drying temperature/drying time in the drying step during the coating in Comparative example 11 was 80°C/3 h; that the weight ratios of Li₂FeP₂O₇/Al₂O₃ in Comparative examples 8-9 were respectively 1:3 and 1:1; that only Li₂FeP₂O₇ was used in Comparative example 10, and that only Al₂O₃ was used in Comparative example 11.

### Preparation of positive electrode plate

The prepared lithium manganese phosphate positive electrode active material coated with two layers, the conductive agent acetylene black, and the binder polyvinylidene fluoride (PVDF) were added at a weight ratio of 92:2.5:5.5 to N-methylpyrrolidone (NMP), stirred and mixed to uniformity to obtain a positive electrode slurry. Then the positive electrode slurry was uniformly applied on an aluminum foil at 0.280 g/1540.25 mm², followed by drying, cold pressing, and slitting, to obtain a positive electrode plate.

### Preparation of negative electrode plate

The negative electrode active material artificial graphite, the conductive agent super-conductive carbon black (Super-P), the binder styrene butadiene rubber (SBR), and the thickener sodium carboxymethyl cellulose (CMC-Na) were dissolved at a mass ratio of 95%:1.5%:1.8%:1.7% in deionized water, fully stirred, and mixed to uniformity to obtain a negative electrode slurry with a viscosity of 3000 mPa s and a solid content of 52%. The negative electrode slurry was applied on a 6-µm negative electrode current collector copper foil, followed by baking at 100°C for drying for 4 hours and roll pressing, to obtain a negative electrode plate with a compacted density of 1.75 g/cm³.

### Separator

A polypropylene film was used.

### Preparation of electrolyte

Ethylene carbonate, dimethyl carbonate, and 1,2-propanediol carbonate were mixed at a volume ratio of 1:1:1, and then LiPF₆ was dissolved to uniformity in the solution to obtain an electrolyte. In the electrolyte, a concentration of LiPF₆ was 1 mol/L.

### Preparation of full cell

The positive electrode plate, separator, and negative electrode plate obtained above were stacked in order, so that the separator was placed between the positive and negative electrodes for separation, and winding was performed to obtain a jelly roll. The jelly roll was placed in an outer package, the electrolyte was injected, and the outer package was sealed to obtain a full cell (also referred to as "full battery" hereinafter).

### Preparation of button cell

The prepared positive electrode active material, PVDF, and acetylene black were added at a weight ratio of 90:5:5 to NMP and stirred in a drying room to obtain a slurry. The slurry was applied onto an aluminum foil, followed by drying and cold pressing, to obtain a positive electrode plate. The coating amount was 0.2 g/cm² and the compacted density was 2.0 g/cm³.

A lithium sheet used as the negative electrode, a solution containing ethylene carbonate (EC) + diethyl carbonate (DEC) + dimethyl carbonate (DMC) at a volume ratio of 1:1:1 and 1 mol/L LiPF₆ used as the electrolyte, and the prepared positive electrode plate were assembled together in a button cell box to form a button cell (also referred to as "button battery" hereafter).

### Property test for positive electrode active material

### 1. Determination of chemical formula of core and composition of different coating layers

An aberration corrected scanning transmission electron microscope (ACSTEM) was used for high spatial resolution characterization of the internal microstructure and surface structure of the positive electrode active material, and the chemical formula of the core and the composition of the first and second coating layers of the positive electrode active material were obtained in combination with three-dimensional reconstruction techniques.

### 2. Test for initial gram capacity of button cell

The prepared button cell was charged to 4.3 V at 0.1C under a voltage of 2.5 V-4.3 V, then charged at constant voltage of 4.3 V to a current less than or equal to 0.05 mA, left standing for 5 min, and then discharged to 2.0 V at 0.1C, and a discharge capacity at this moment was an initial gram capacity and recorded as D0.

### 3. Test for average discharge voltage (V) of button cell

The prepared button cell was left standing for 5 minutes at a constant temperature of 25°C, discharged to 2.5 V at 0.1C, left standing for 5 minutes, charged to 4.3 V at 0.1C, and then charged at a constant voltage of 4.3 V to a current less than or equal to 0.05 mA. After left standing for 5 minutes, the button cell was discharged to 2.5 V at 0.1C. A discharge capacity at this moment was recorded as an initial gram capacity, denoted as D0, discharge energy was recorded as initial energy, denoted as E0, and the average discharge voltage V of the button cell was E0/D0.

### 4. Swelling test for full cell at 60°C

The prepared full cells in 100% state of charge (SOC) were stored at 60°C.The open circuit voltage (OCV) and alternating current internal resistance (IMP) of the cells were measured before, during, and after storage to monitor the SOCs and the volumes of the cells were measured. The full cells were taken out after every 48 h of storage and left standing for 1 h. Then the open circuit voltage (OCV) and internal resistance (IMP) were measured, and the cell volumes were measured by a drainage method after the cells were cooled to room temperature. In the drainage method, first a scale that automatically performs unit conversion on dial data was used to separately measure a weight of the cell, denoted as F₁, then the cell was completely placed into deionized water (density known to be 1 g/cm³), and the weight of the cell at this moment was measured as F₂. The buoyant force experienced by the cell, denoted as F_{buoyancy}, was calculated as F₁-F₂. Then, according to Archimedes' principle, F_{buoyantcy} = ρ × g × V_{displacement}, the volume V of the cell could be calculated as V=(F₁-F₂)/(ρ × g).

It can be learned from the OCV and IMP test results that the cells of all the examples always maintained an SOC of 99% or more throughout the storage test.

After 30 days of storage, the cell volumes were measured and the percentage increases in the cell volumes after storage relative to the cell volumes before storage were calculated.

In addition, the residual capacity was measured for the cells. The full cell was charged to 4.3 V at 1C under a voltage of 2.5 V-4.3 V, then charged at constant voltage of 4.3 V to a current less than or equal to 0.05 mA, left standing for 5 min, and the charge capacity at this moment was recorded as the residual capacity of the cell.

### 5. Test for cycling performance of full cell at 45°C

The prepared full cell was charged to 4.3 V at 1C under a voltage of 2.5 V-4.3 V at a constant temperature of 45°C, and then charged at constant voltage of 4.3 V to a current less than or equal to 0.05 mA. After left standing for 5 min, the full cell was discharged to 2.5 V at 1C. The discharge capacity at this moment was recorded as D0. The charge/discharge cycle was repeated until the discharge capacity was reduced to 80% of D0. The number of cycles the cell had undergone at this moment was recorded.

### 6. Test for lattice change rate

At a constant temperature of 25°C, the prepared positive electrode active material samples were placed in an XRD instrument (model: Bruker D8 Discover), and the samples were tested at 1°/min. The test data were organized and analyzed, and the lattice constants a0, b0, c0, and v0 (where a0, b0, and c0 represent the lengths of faces of the unit cell, and v0 denotes the volume of the unit cell, which can be obtained directly from XRD refinement results) at this moment were calculated with reference to standard PDF cards.

The positive electrode active material sample was used for preparation of a button cell using the foregoing preparation method of button cell, and the button cell was charged at a small rate of 0.05C until the current was reduced to 0.01C. The positive electrode plate in the button cell was then taken and placed in dimethyl carbonate (DMC) for 8 hours, dried, and scraped for powder, and particles with a particle size less than 500 nm were sifted out from the powder. Samples were taken and subjected to the same way as the fresh samples under test above to calculate their unit cell volumes v1, and (v0-v1)/v0×100% was taken as their lattice change rates (unit cell volume change rate) before and after complete lithium deintercalation and intercalation to be listed in the table.

### 7. Test for Li/Mn antisite defect concentration

The Li/Mn antisite defect concentration was obtained by comparing the XRD results in the "lattice change rate measurement method" with the standard crystal PDF (Powder Diffraction File) cards. Specifically, the XRD results in the "lattice change rate measurement method" were imported into the general structural analysis system (GSAS) software for automatic obtaining of refinement results that contain the occupancy of the different atoms, and the Li/Mn antisite defect concentration was obtained by reading the refinement results.

### 8. Test for transition metal dissolution

The full cell that was cycled at 45°C until the capacity decayed to 80% was discharged to a cut-off voltage of 2.0 V at a rate of 0.1C. The cell was then disassembled, the negative electrode tab was removed, and 30 discs with a unit area (1540.25 mm²) were randomly taken on the negative electrode tab and tested by using Agilent ICP-OES730 for inductively coupled plasma atomic emission spectroscopy (ICP). The amounts of Fe (if the Mn site of the positive electrode active material was doped with Fe) and Mn were calculated from the ICP results, so as to calculate the amount of Mn (and Fe doped at the Mn site) dissolved after the cycling. The test standard was based on EPA-6010D-2014.

### 9. Test for valence state of surface oxygen

5 g of the prepared positive electrode active material sample was taken and used for preparation of a button cell according to the preparation method of button cell described above. The button cell was charged at a small rate of 0.05C until the current was reduced to 0.01C. The positive electrode plate in the button cell was then taken and placed in dimethyl carbonate (DMC) for 8 hours, dried, and scraped for powder, and particles with a particle size less than 500 nm were sifted out from the powder. The obtained particles were measured by using electron energy loss spectroscopy (EELS; the model of the instrument used was Talos F200S) to obtain energy loss near edge structures (ELNES) that reflect the density of states and energy level distribution of elements. Based on the density of states and energy level distribution, the number of occupying electrons was calculated by integrating the data of the valence band density of states to deduce the valence state of surface oxygen after charging.

### 10. Compacted density measurement

5 g of the prepared positive electrode active material powder was taken and put in a special mold for compaction (CARVER mold, model 13 mm, USA), and then the mold was placed on a compacted density tester. A pressure of 3T was applied, the thickness of the powder under the pressure (the thickness after pressure relief, with the container used for testing having an area of 1540.25 mm²) was read on the device, and the compacted density was calculated by ρ=m/v.

### 11. Determination of crystallinity of pyrophosphate and phosphate by X-ray diffraction method

5 g of the prepared positive electrode active material powder was taken, and a total scattering intensity was measured by X-ray, where the total scattering intensity was a sum of scattering intensities of substances in the entire space and was only related to the intensity of the primary rays, the chemical structure, a total number of electrons participating in the diffraction, that is, the mass, and not to the order state of the sample. Then, crystalline scattering was separated from non-crystalline scattering in a diffraction pattern, where the crystallinity is a ratio of a scattering intensity of the crystalline part to the total scattering intensity.

### 12. Interplanar spacing and included angle

1 g of each prepared positive electrode active material powder was taken and placed into a 50 mL test tube, 10 mL of alcohol with a mass fraction of 75% was injected into the test tube, and the substances were then fully stirred and dispersed for 30 minutes. Then an appropriate amount of the solution was taken with a clean disposable plastic pipette and added dropwise on a 300 mesh copper grid. At this moment, part of the powder would remain on the copper grid. The copper grid with the sample was transferred to the TEM (Talos F200s G2) sample cavity for testing, and original TEM test images were obtained and saved in an original image format (xx.dm3).

The original image obtained from the TEM test was opened in DigitalMicrograph software, and Fourier transform was performed (done automatically by the software upon clicking) to obtain a diffraction pattern. A distance from the diffraction spot to the center of the diffraction pattern was measured to obtain the interplanar spacing, and the included angle was calculated according to the Bragg equation.

### 13. Test for coating layer thickness

The thickness of the coating layer was tested mainly in the following manner. A thin slice of about 100 nm thickness was cut from the middle of a single particle of the prepared positive electrode active material by FIB, then a TEM test was performed on the thin slice, and original TEM test images were obtained and saved in an original image format (xx.dm3).

The original image obtained from the TEM test was opened in DigitalMicrograph software, the coating layer was identified by using the information of the lattice spacing and included angle, and the thickness of the coating layer was measured.

The thicknesses at three locations were measured for the selected particle and the average value was taken.

The results of the foregoing tests are shown in Tables 1-4.

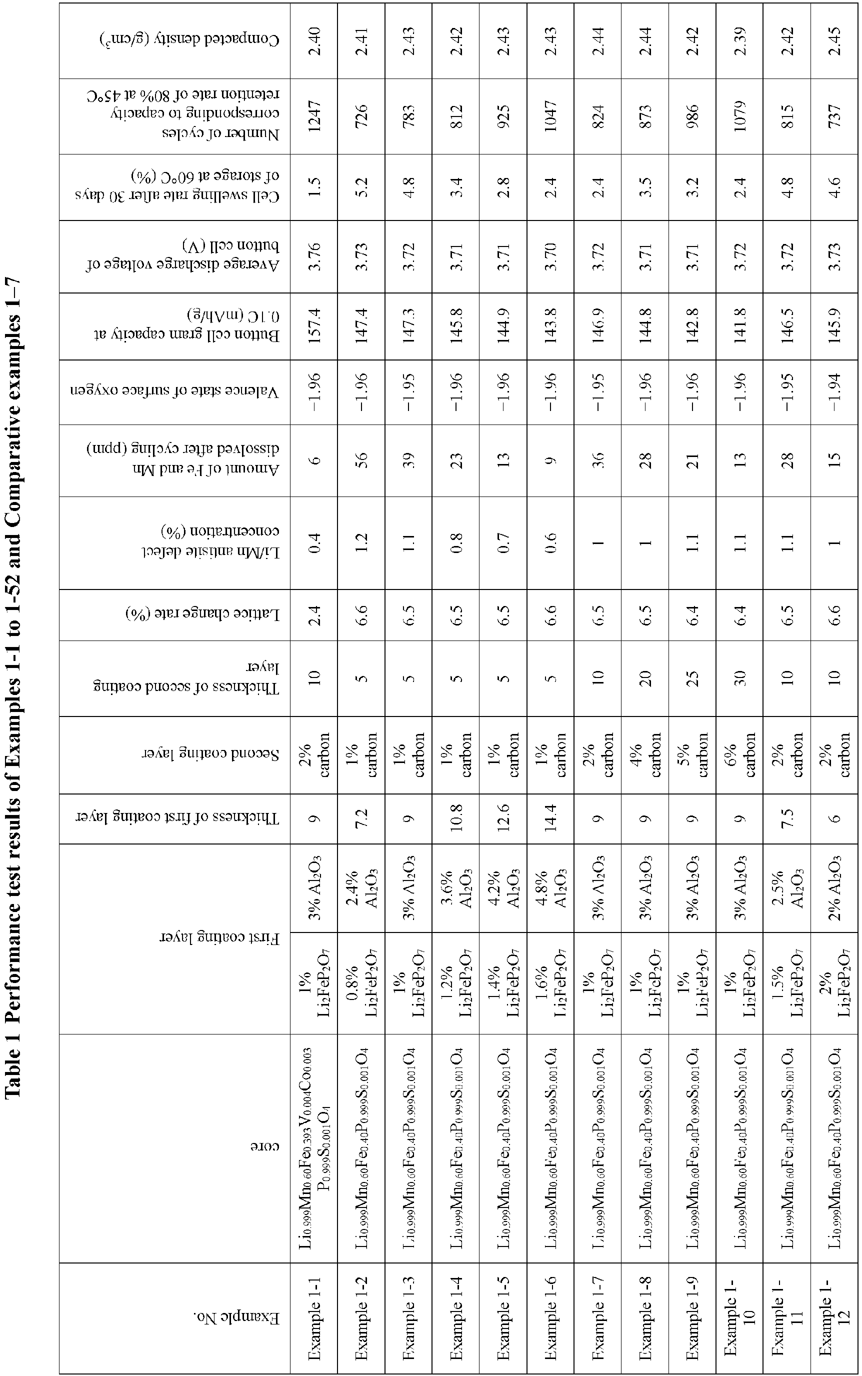

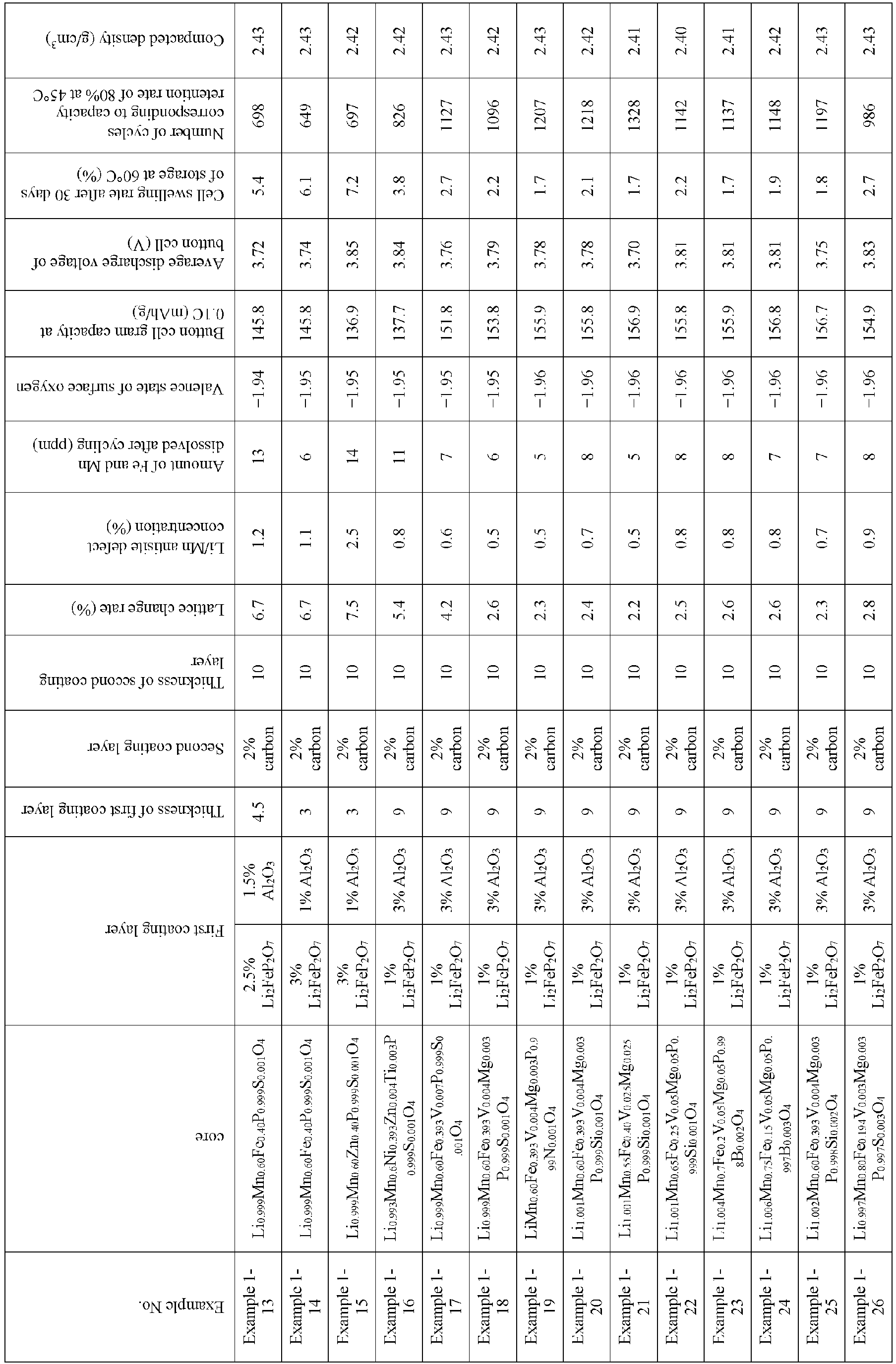

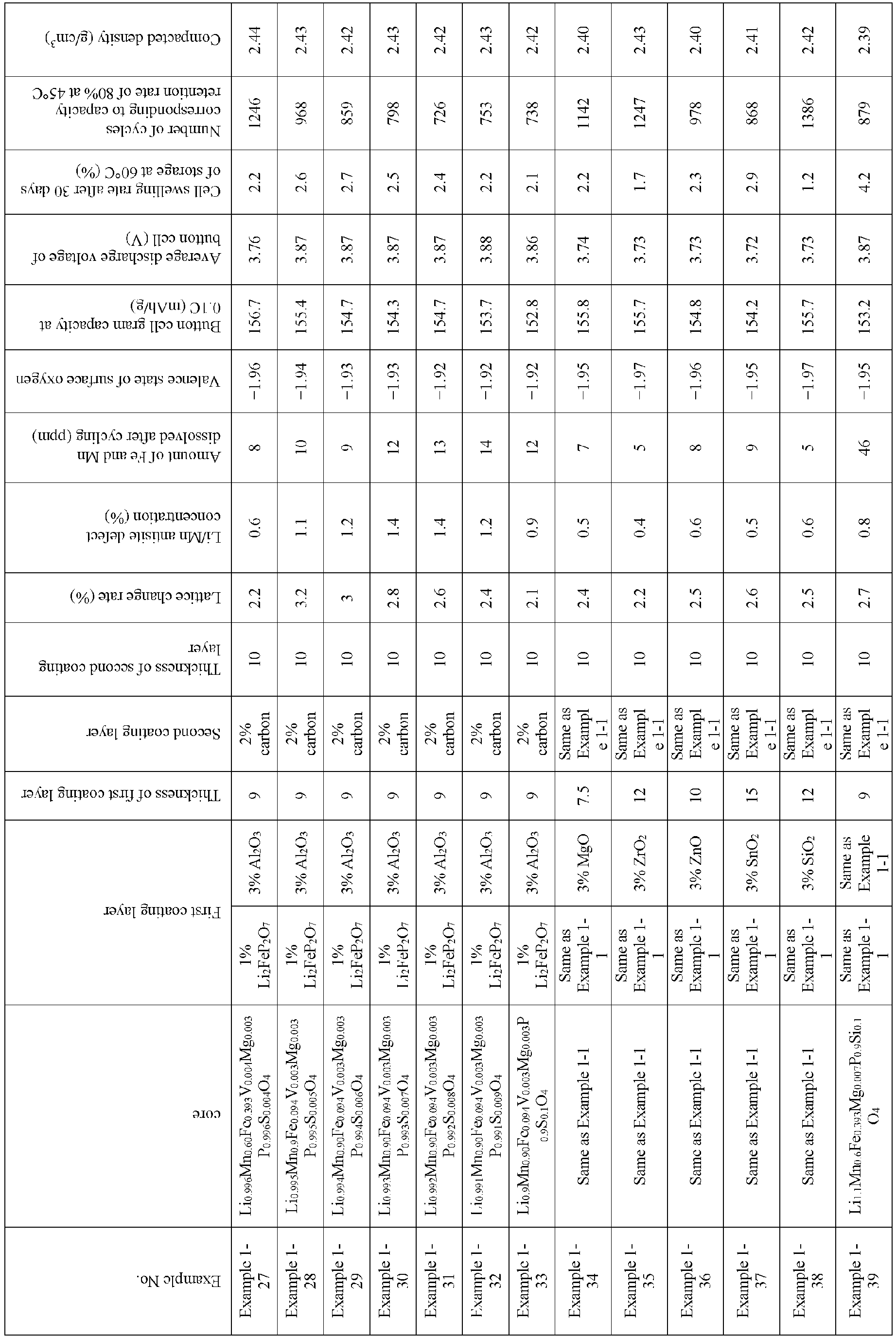

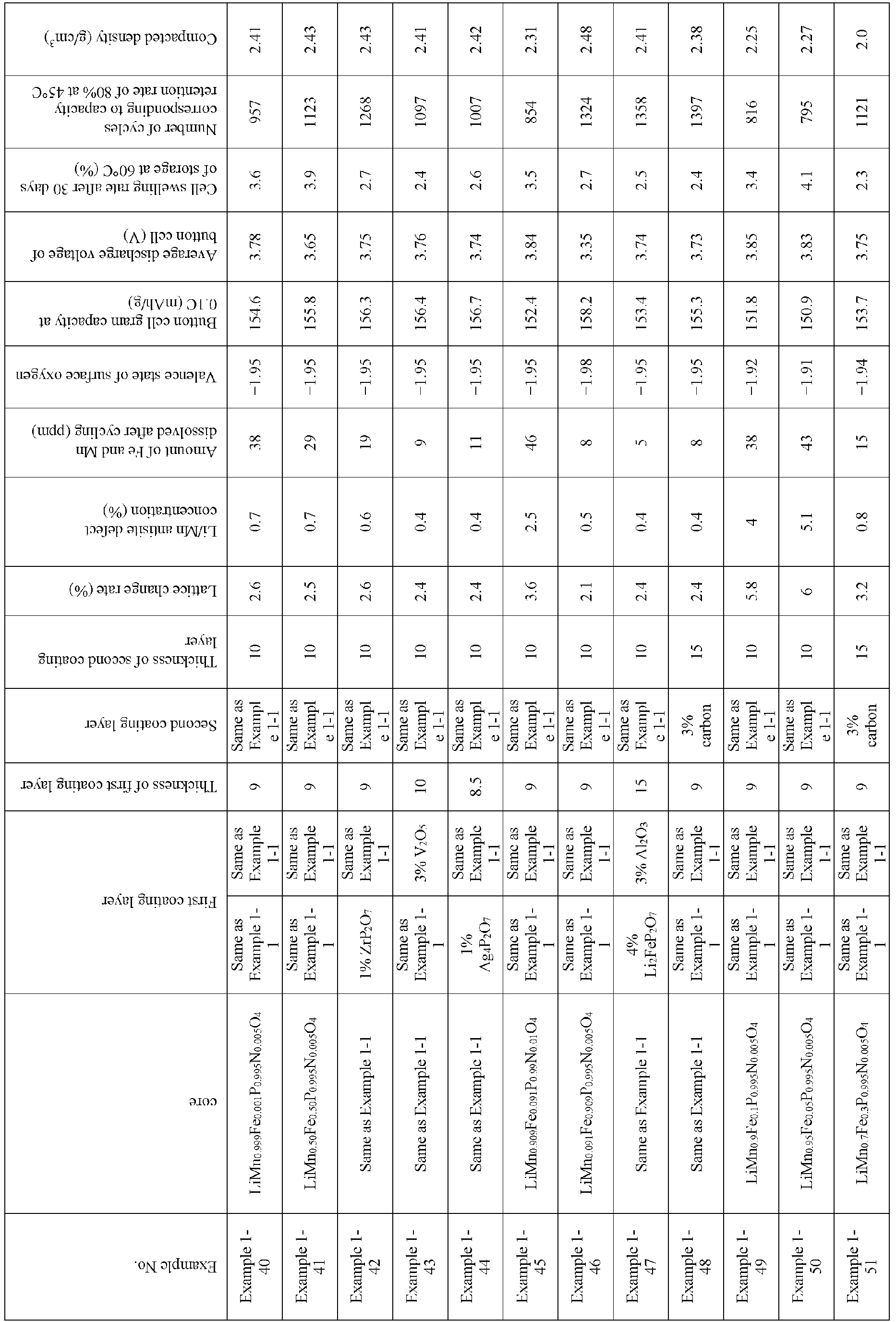

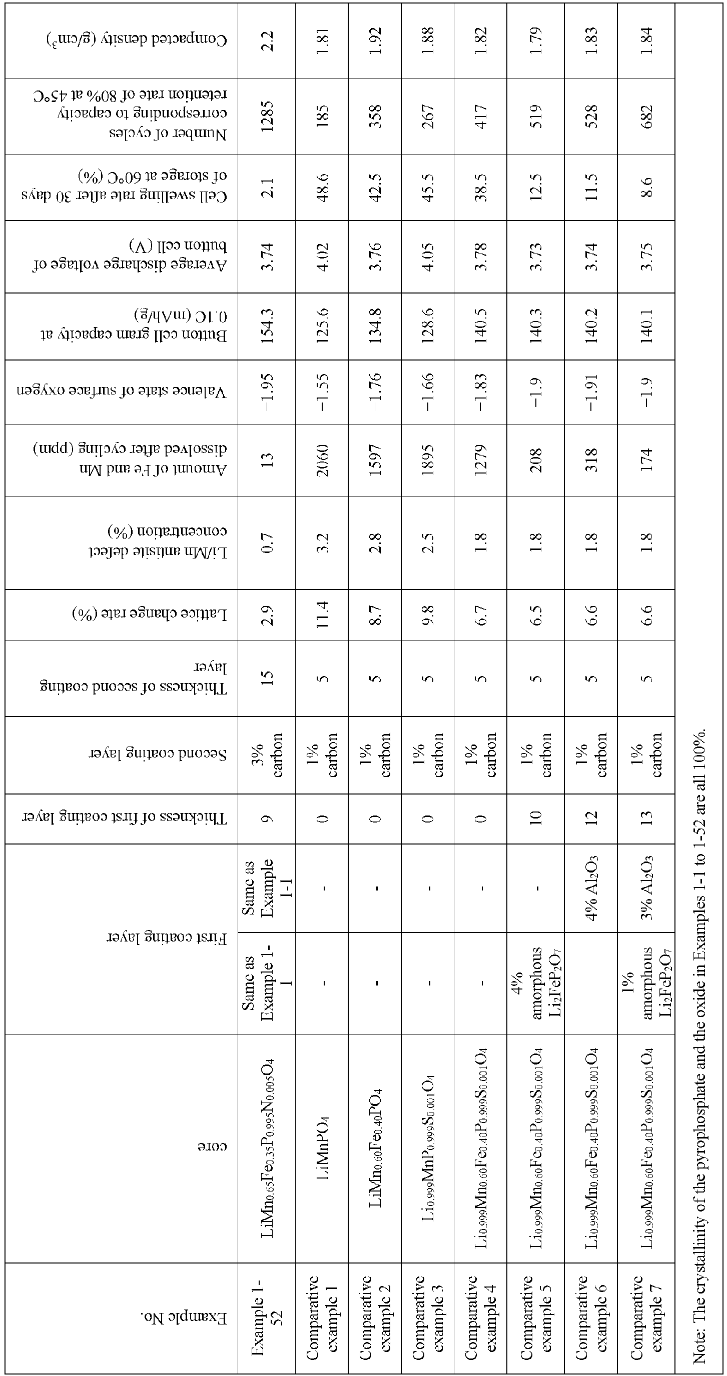

It can be learned from Examples 1-1 to 1-52 and Comparative examples 1 to 4 that the presence of the first coating layer is conducive to reducing the Li/Mn antisite defect concentration and amount of Fe and Mn dissolved after cycling in the resulting material, increasing the button cell gram capacity and compacted density of the battery, and improving the safety performance and cycling performance of the battery. When other elements are doped at the Mn and phosphorus sites, respectively, the lattice change rate, antisite defect concentration, and amount of Fe and Mn dissolved in the resulting material can be significantly reduced, the gram capacity and compacted density of the battery can be increased, and the safety performance and cycling performance of the battery can be improved.

It can be learned from Examples 1-2 to 1-6 that as the amount of the first coating layer increases from 3.2% to 6.4%, in the resulting material, the Li/Mn antisite defect concentration is gradually decreased, the amount of Fe and Mn dissolved after cycling is gradually decreased, and the safety performance and 45°C cycling performance of the corresponding battery are improved, but the button cell gram capacity is slightly decreased. Optionally, the corresponding battery has the best overall performance when the total amount of the first coating layer is 4-5.6% by weight.

It can be learned from Example 1-3 and Examples 1-7 to 1-10 that as the amount of the second coating layer increases from 1% to 6%, in the resulting material, the amount of Fe and Mn dissolved after cycling is gradually decreased, and the safety performance and 45°C cycling performance of the corresponding battery are improved, but the button cell gram capacity is slightly decreased. Optionally, the corresponding battery has the best overall performance when the total amount of the second coating layer is 3-5% by weight.

It can be learned from Examples 1-11 to 1-15 and Comparative examples 5 and 6 that when both Li₂FeP₂O₇ and Al₂O₃ are present in the first coating layer, in particular Li₂FeP₂O₇ and Al₂O₃ at a weight ratio of 1:3 to 3:1, and particularly 1:3 to 1:1, the improvement in battery performance is more significant.

**Table 2 Performance test results of Example 1-1 and Examples 2-1 to 2-4**

| Example No. | First coating | layer | Crystallinity of pyrophosphate | Crystallinity of oxide | Lattice change rate (%) | Li/Mn antisite defect concentration (%) | Amount of Fe and Mn dissolved after cycling (ppm) | Valence state of surface oxygen | Button cell capacity at 0.1C (mAh/g) | Average discharge voltage of button cell (V) | Cell swelling rate after 30 days of storage at 60°C (%) | Cycling capacity retention rate at 45°C |
|---|---|---|---|---|---|---|---|---|---|---|---|---|
| Example 1-1 | 1% | 3% | 100% | 100% | 2.4 | 0.4 | 6 | -1.96 | 157.4 | 3.76 | 1.5 | 1247 |
| | Li₂FeP₂O₇ | Al₂O₃ | | | | | | | | | | |
| Example 2-1 | 1% | 3% | 30% | 100% | 6.3 | 1.9 | 113 | -1.86 | 142.1 | 3.68 | 4.3 | 597 |
| | Li₂FeP₂O₇ | Al₂O₃ | | | | | | | | | | |
| Example 2-2 | 1% | 3% | 50% | 100% | 4.7 | 1.2 | 59 | -1.87 | 146.3 | 3.71 | 4.1 | 798 |
| | Li₂FeP₂O₇ | Al₂O₃ | | | | | | | | | | |
| Example 2-3 | 1% | 3% | 70% | 100% | 3.5 | 0.8 | 18 | -1.89 | 150.7 | 3.72 | 3.1 | 968 |
| | Li₂FeP₂O₇ | Al₂O₃ | | | | | | | | | | |
| Example 2-4 | 1% | 3% | 10% | 100% | 6.7 | 2.0 | 141 | -1.83 | 140.9 | 3.65 | 4.8 | 496 |
| | Li₂FeP₂O₇ | Al₂O₃ | | | | | | | | | | |

It can be seen from Table 2 that as the crystallinity of pyrophosphate in the first coating layer gradually increases, in the corresponding material, the lattice change rate, Li/Mn antisite defect concentration, and amount of Fe and Mn dissolved are gradually decreased, and in the battery, the button cell capacity is gradually increased and the safety performance and cycling performance are gradually improved.

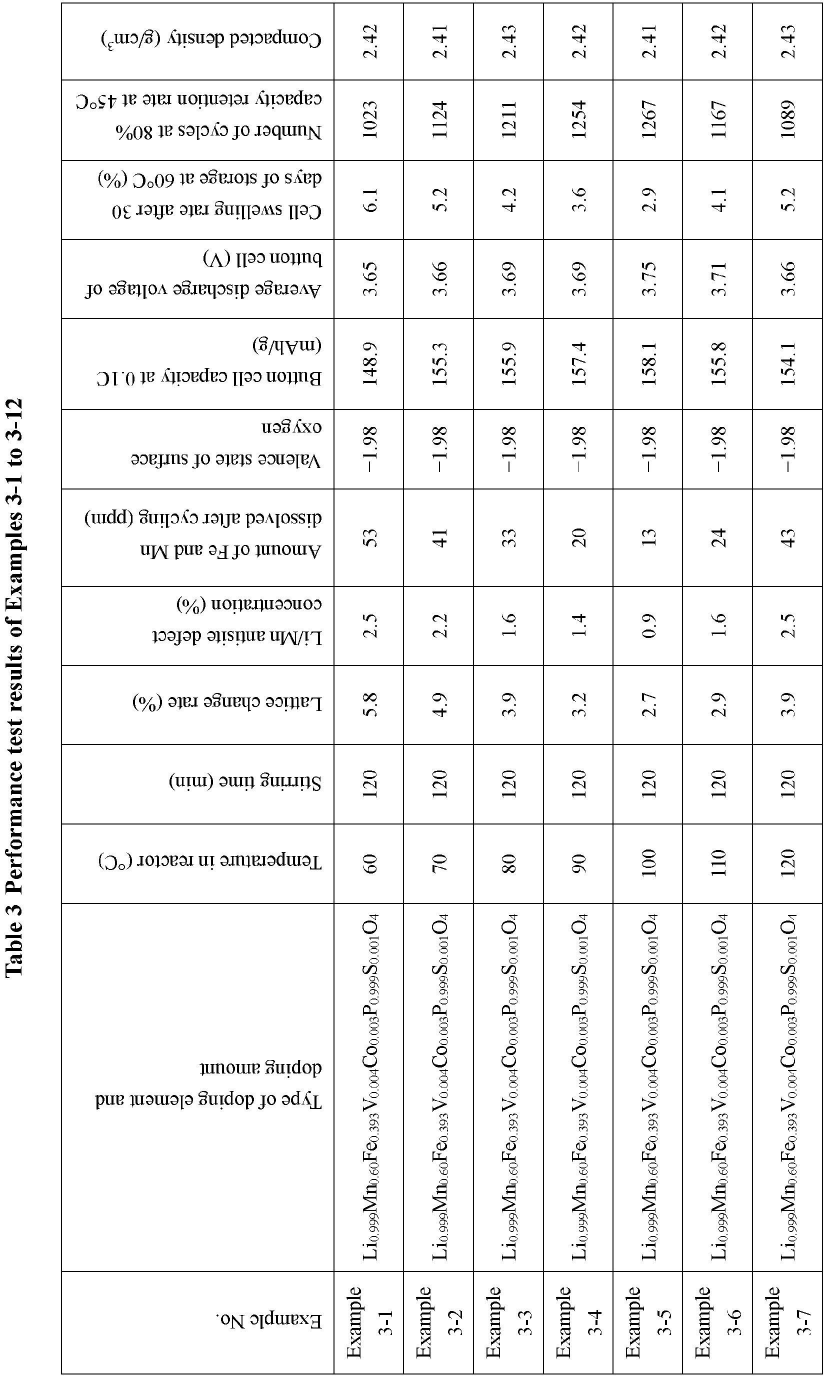

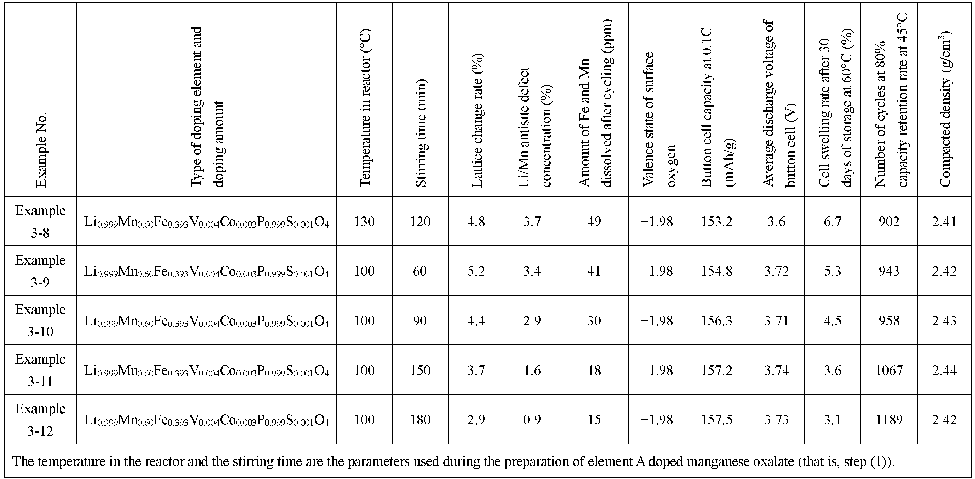

It can be seen from Table 3 that adjustment of the reaction temperature and reaction time in the reactor during the preparation of manganese oxalate particles can further improve the various performance of the positive electrode material in this application. For example, when the reaction temperature is gradually increased from 60°C to 130°C, the lattice change rate and Li/Mn antisite defect concentration are decreased first and then increased, and the amount of metal dissolved after cycling and the safety performance also correspondingly present a similar pattern, while the button cell capacity and the cycling performance are increased first and then decreased with the increase in temperature. With the reaction temperature controlled to be constant, adjustment of the reaction time can also present a similar pattern.

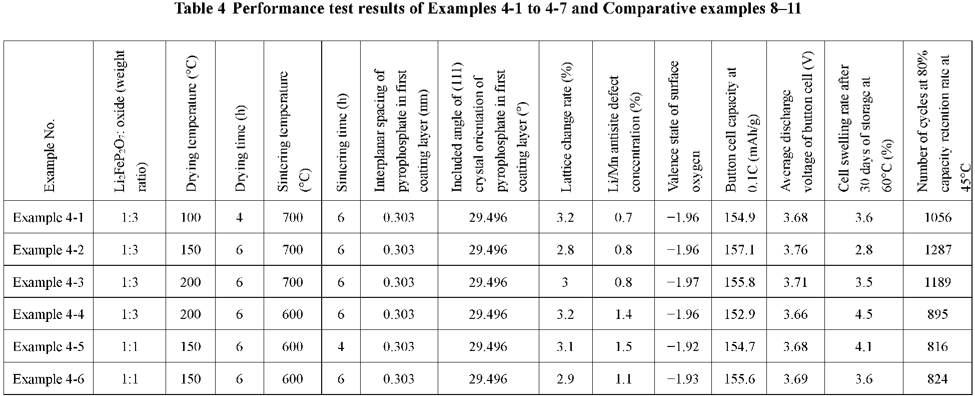

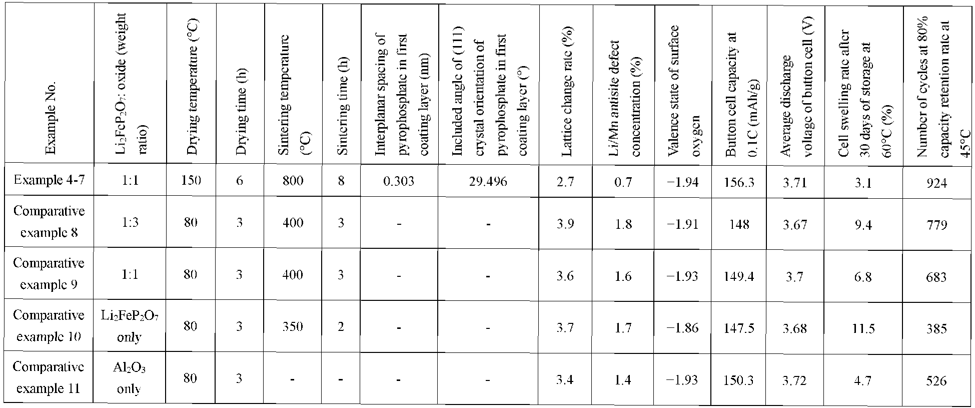

It can be seen from Table 4 that during the preparation of lithium iron pyrophosphate by the method in this application, adjustment of the drying temperature/time and sintering temperature/time during the preparation can improve the performance of the resulting material, thereby improving the battery performance; and during the coating, adjustment of the drying temperature/time and sintering temperature/time can improve the performance of the resulting material, thereby improving the battery performance. It can be seen from the Comparative examples 8-11 that when the drying temperature during the preparation of lithium iron pyrophosphate is lower than 100°C or the temperature in the sintering step is lower than 400°C, the Li₂FeP₂O₇ desired to be prepared by this application cannot be obtained, thereby failing to improve the material performance and the performance of the secondary battery.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A positive electrode active material with a core-shell structure, comprising a core and a shell covering the core, wherein
the core comprises Li₁₊ₓMn_{1-y}A_{y}P_{1-z}R_{z}O₄, wherein x is any value in the range from -0.100 to 0.100; y is any value in the range from 0.001 to 0.500; z is any value in the range from 0.001 to 0.100; A is one or more elements selected from Zn, Al, Na, K, Mg, Mo, W, Ti, V, Zr, Fe, Ni, Co, Ga, Sn, Sb, Nb, and Ge, optionally one or more elements selected from Zn, Fe, Ti, V, Ni, Co, and Mg; and R is one or more elements selected from B, Si, N, and S; and
the shell comprises a first coating layer covering the core and a second coating layer covering the first coating layer;
wherein the first coating layer comprises a crystalline pyrophosphate MₐP₂O₇ and a crystalline oxide M'_{b}O_{c}, wherein a is greater than 0 and less than or equal to 4; b is greater than 0 and less than or equal to 2; c is greater than 0 and less than or equal to 5; M is one or more elements selected from Li, Fe, Ni, Mg, Co, Cu, Zn, Ti, Ag, Zr, Nb, and Al, optionally one or more elements selected from Li, Fe, and Zr; and M' is one or more elements selected from alkali metals, alkaline earth metals, transition metals, group IIIA elements, group IVA elements, lanthanides, and Sb, optionally one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, and more optionally one or more elements selected from Mg, Al, Si, Zn, Zr, and Sn; and
the second coating layer comprises carbon.

2. The positive electrode active material according to claim 1, wherein
a ratio of y to 1-y in the core is 1:10 to 10:1, optionally 1:4 to 1:1.

3. The positive electrode active material according to claim 1 or 2, wherein
a ratio of z to 1-z in the core is 1:9 to 1:999, optionally 1:499 to 1:249.

4. The positive electrode active material according to any one of claims 1 to 3, wherein
a coating amount of the first coating layer is greater than 0% by weight and less than or equal to 7% by weight, optionally 4-5.6% by weight based on a weight of the core.

5. The positive electrode active material according to any one of claims 1 to 4, wherein
a weight ratio of the pyrophosphate to the oxide in the first coating layer is 1:3 to 3:1, optionally 1:3 to 1:1.

6. The positive electrode active material according to any one of claims 1 to 5, wherein
the pyrophosphate in the first coating layer has an interplanar spacing of 0.293-0.326 nm, and an included angle of 26.41°-32.57° for a (111) crystal orientation;
optionally, the interplanar spacing of the pyrophosphate in the first coating layer is 0.300-0.310 nm; and/or
optionally, the included angle of the (111) crystal orientation of the pyrophosphate in the first coating layer is 29.00°-30.00°.

7. The positive electrode active material according to any one of claims 1 to 6, wherein
a crystallinity of the pyrophosphate in the first coating layer is 10% to 100%, optionally 50% to 100%.

8. The positive electrode active material according to any one of claims 1 to 7, wherein
a coating amount of the second coating layer is greater than 0% by weight and less than or equal to 6% by weight, optionally 3-5% by weight based on the weight of the core.

9. The positive electrode active material according to any one of claims 1 to 8, wherein
A is at least two elements selected from Fe, Ti, V, Ni, Co, and Mg.

10. The positive electrode active material according to any one of claims 1 to 9, wherein
the positive electrode active material has a Li/Mn antisite defect concentration of 5.1% or less, optionally 4% or less, and more optionally 2% or less.

11. The positive electrode active material according to any one of claims 1 to 10, wherein
a lattice change rate of the positive electrode active material before and after complete lithium deintercalation and intercalation is 7.5% or less, optionally 6% or less, and more optionally 4% or less.

12. The positive electrode active material according to any one of claims 1 to 11, wherein
a valence state of surface oxygen of the positive electrode active material is -1.83 or less, optionally -1.88 or less, and more optionally -1.98 to 1.88.

13. The positive electrode active material according to any one of claims 1 to 12, wherein
a compacted density of the positive electrode active material under 3 tons is 2.0 g/cm³ or more, optionally 2.2 g/cm³ or more.

14. A preparation method of positive electrode active material, comprising the following steps:
a step of providing a core material: the core material comprising Li₁₊ₓMn_{1-y}A_{y}P_{1-Z}R_{Z}O₄, wherein x is any value in the range from -0.100 to 0.100; y is any value in the range from 0.001 to 0.500; z is any value in the range from 0.001 to 0.100; A is one or more elements selected from Zn, Al, Na, K, Mg, Mo, W, Ti, V, Zr, Fe, Ni, Co, Ga, Sn, Sb, Nb, and Ge, optionally one or more elements selected from Zn, Fe, Ti, V, Ni, Co, and Mg; and R is one or more elements selected from B, Si, N, and S; and
a coating step: providing a powder comprising pyrophosphate MₐP₂O₇ and a suspension comprising a carbon source and oxide M'_{b}O_{c}, and mixing the core material, the powder comprising pyrophosphate MₐP₂O₇, and the suspension comprising a carbon source and oxide M'_{b}O_{c} for sintering, to obtain a positive electrode active material, wherein a is greater than 0 and less than or equal to 4; b is greater than 0 and less than or equal to 2; c is greater than 0 and less than or equal to 5; M is one or more elements selected from Li, Fe, Ni, Mg, Co, Cu, Zn, Ti, Ag, Zr, Nb, and Al, optionally one or more elements selected from Li, Fe, and Zr; and M' is one or more elements selected from alkali metals, alkaline earth metals, transition metals, group IIIA elements, group IVA elements, lanthanides, and Sb, optionally one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, and more optionally one or more elements selected from Mg, Al, Si, Zn, Zr, and Sn;
wherein the positive electrode active material has a core-shell structure, comprising a core and a shell covering the core, the core comprising Li₁₊ₓMn_{1-y}A_{y}P_{1-Z}R_{Z}O₄, and the shell comprising a first coating layer covering the core and a second coating layer covering the first coating layer; wherein the first coating layer comprises a crystalline pyrophosphate MₐP₂O₇ and a crystalline oxide M'_{b}O_{c}, and the second coating layer comprises carbon.

15. The preparation method according to claim 14, the step of providing a core material comprises the following steps:
step (1): mixing a manganese source, a source of element A, and an acid to obtain a mixture; and
step (2): mixing the mixture with a lithium source, a phosphorus source, a source of element R, and an optional solvent for sintering under protection of an inert gas to obtain the core material comprising Li₁₊ₓMn_{1-y}A_{y}P_{1-z}R_{z}O₄; wherein
optionally, the step (1) is performed at 20°C-120°C, more optionally at 25°C-80°C; and/or in the step (1), the mixing is carried out by stirring at 500-700 rpm for 60-420 minutes; and
optionally, the source of element A is one or more selected from elementary substance, sulfates, halides, nitrates, organic acid salts, oxides, and hydroxides of element A; and/or the source of element R is one or more selected from elementary substance, sulfates, halides, nitrates, organic acid salts, oxides, hydroxides, and inorganic acids of element R.

16. The preparation method according to claim 14 or 15, wherein
the powder comprising pyrophosphate MₐP₂O₇ is prepared by the following steps:
mixing a source of element M, a phosphorus source, and an optional solvent to obtain a mixture, adjusting the pH of the mixture to 4-6, continuing the mixing, and then carrying out drying and sintering; wherein
optionally, the drying is carried out at 100°C-300°C for 4-8 h, more optionally 150°C-200°C; and/or the sintering is carried out at 500°C-800°C under protection of an inert gas for 4-10 h, more optionally 650°C-800°C.

17. The preparation method according to any one of claims 14 to 16, wherein
in the coating step, the sintering temperature is 500-800°C and the sintering time is 4-10 h.

18. A positive electrode plate comprising a positive electrode current collector and a positive electrode film layer disposed on at least one surface of the positive electrode current collector, wherein the positive electrode film layer comprises the positive electrode active material according to any one of claims 1 to 13 or a positive electrode active material prepared by the preparation method according to any one of claims 14 to 17; and optionally, a percentage of the positive electrode active material in the positive electrode film layer is 10% or more by weight based on a total weight of the positive electrode film layer; and
more optionally, the percentage of the positive electrode active material in the positive electrode film layer is 90-99.5% by weight based on the total weight of the positive electrode film layer.

19. A secondary battery, comprising the positive electrode active material according to any one of claims 1 to 13 or a positive electrode active material prepared by the preparation method according to any one of claims 14 to 17 or the positive electrode plate according to claim 18.

20. A battery module, **characterized by** comprising the secondary battery according to claim 19.

21. A battery pack, **characterized by** comprising the battery module according to claim 20.

22. An electric apparatus, **characterized by** comprising at least one selected from the secondary battery according to claim 19, the battery module according to claim 20, and the battery pack according to claim 21.
